# EUROPÄISCHE PATENTSCHRIFT

(11) **EP 4 388 653 B1**
(45) Veröffentlichungstag und Bekanntmachung des Hinweises auf die Patenterteilung: **14.01.2026**
(21) Anmeldenummer: 22768366.1
(22) Anmeldetag: 19.08.2022
(51) Int. Cl.: H02S 40/44

(54) **DACH- UND WANDAUFBAU ZUR KOMBINIERTEN STROM- UND WÄRMEERZEUGUNG**
ROOF AND WALL STRUCTURE FOR COMBINED POWER AND HEAT GENERATION
STRUCTURE DE TOIT ET PAROI POUR PRODUCTION COMBINÉE D'ÉNERGIE ET DE CHALEUR

(30) Priorität: 19.08.2021 DE 102021121567; 06.12.2021 DE 102021132079
(43) Veröffentlichungstag der Anmeldung: 26.06.2024
(73) Patentinhaber: Scherer, Florian, 86316 Friedberg (DE)
(72) Erfinder: Scherer, Florian, 86316 Friedberg (DE)
(74) Vertreter: Lucke, Andreas
(86) Internationale Anmeldenummer: PCT/EP2022/073200
(87) Internationale Veröffentlichungsnummer: WO 2023/021189

(56) Entgegenhaltungen:
- EP-A1- 3 346 605
- DE-A1- 19 809 883
- DE-A1- 19 851 230
- US-A1- 2010 294 362

## Beschreibung

### TECHNISCHES GEBIET DER ERFINDUNG

Die vorliegende Erfindung ist auf dem technischen Gebiet der kombinierten Strom- und Wärmeerzeugung an Gebäuden und betrifft insbesondere ein gebäudeintegriertes Photovoltaik- und Photothermiesystem.

### HINTERGRUND

Die auf einem Gebäude auftreffende Energie ist regelmäßig ausreichend, um zumindest im Jahresmittel den Energiebedarf des Gebäudes zu decken. Dazu können Photovoltaikmodule zum Erzeugen von elektrischem Strom und Photothermiesysteme zur Erzeugung von Warmwasser verwendet werden, und die gewonnene Energie kann jeweils Verbrauchern in dem Gebäude zugeführt werden. Die genannten Systeme können zwar grundsätzlich parallel nebeneinander auf einem Gebäude angebracht werden, vorzugsweise werden diese jedoch kombiniert, um die Gebäudefläche effizienter nutzen zu können.

Zu diesem Zweck sind eine Reihe kombinierter Photovoltaik- und Photothermiemodule auf dem Markt erhältlich. Üblicherweise wird dabei auf der Hinterseite von Photovoltaikmodulen ein Wärmetauscher angebracht, welcher zum einen die Photovoltaikmodule kühlen kann und zum anderen Wärmeenergie für Verbraucher bereitstellen kann. Diese kombinierten Module können bspw. auf Schienen an einem bestehenden Dach montiert werden und über Stromkabel/Schläuche mit den jeweiligen Regelelementen in dem Gebäude verbunden werden.

Aus der Patentschrift DE 100 48 035 B4 ist es ferner bekannt, für das Dach eines Gebäudes Dacheindeckungselemente zu verwenden, welche gleichzeitig als solare Wärmekollektoren und Solarstrom-Module ausgebildet sind. Die Dacheindeckungselemente bestehen aus einer Dachschare aus Profilblech, mindestens einem oberseitig aufgebrachten Solar-Laminat und unterseitig angebrachten Wärmekollektorrohren zur Ableitung von solar erwärmtem Wasser. Auf der Rückseite kann eine Wärmedämmung angebracht werden, sodass die entsprechenden Dacheindeckungselemente industriell gefertigt werden und auf einem Dach verlegt werden können, um eine isolierende Dachhaut zu bilden.

Aus der Veröffentlichungsschrift WO 2017/029516 A1 ist es ferner bekannt, Aluminiumstrangpressprofile mit integrierten flüssigkeitsführenden Kanälen und einer Aussparung für Photovoltaikmodule auszubilden, welche als Dacheindeckungselemente miteinander verbunden werden können.

Aus der Veröffentlichungsschrift DE 10 2010 013 673 A1 ist eine Vorrichtung zum Befestigen von Photovoltaikmodulen bekannt, wobei Profilschienen der Vorrichtung Kanäle zum Führen eines Wärmeträgermediums ausbilden.

Aus der Patentschrift EP 2 253 024 B1 ist es bekannt, Dachziegel mit integrierten Photovoltaikelementen an Rohrleitungen auf einem Dach zu koppeln. Die Photovoltaikmodule werden dabei in den Dachziegeln über Metallsubstrate verschraubt.

Aus der Veröffentlichungsschrift WO 2009/ 090 347 A2 ist es bekannt, Photovoltaikmodule auf einem Blechdach aufzukleben, um die Photovoltaikmodule passiv zu kühlen.

DE 198 51 230 A1 offenbart ein Solarelement aus Metall, das in herkömmlicher Weise in Längsrichtung profilierbar ist und durch geeignete Gestaltung der Längskanten zusammengefügt werden kann. Daraus entsteht eine verwindungssteife Platte, deren in Längsrichtung verlaufende Kanäle als Leiter für flüssige oder gasförmige Medien zum Transport von Solarwärme genutzt werden können. Die Unterseite der Blechtafel wird mit einer flachen oder profilierten Abdeckung verschlossen und dadurch entstehen weitere Kanäle.

EP 3 346 605 A1 offenbart ein thermisch-photovoltaisches Hybridsolarsystem, das ein im Wesentlichen planares Photovoltaikpaneel und einen im Wesentlichen planaren thermischen Kollektor umfasst, wobei das Photovoltaikpaneel und der thermische Kollektor so gestapelt sind, dass ihre jeweiligen ebenen Flächen im Wesentlichen parallel sind, und wobei zwischen dem Photovoltaikpaneel und dem Wärmekollektor eine Graphitschicht angeordnet ist. Die Erfindung betrifft weiterhin Baugruppen, die diese Systeme umfassen, sowie deren Verwendung.

DE 198 09 883 A1 offenbart einen Hybridkollektor bestehend aus transparenter Abdeckung, Feuchtigkeitsbarriere und Solarzellen. Die Konstruktion umfasst klebende Kunststoffschichten, die durch Abdeckungen und Zellen eingeklemmt werden, eine elektrisch isolierende Kunststoffschicht und ein Fluidsystem.

### ZUSAMMENFASSUNG DER ERFINDUNG

Die aus dem Stand der Technik bekannten kombinierten Module zur Dacheindeckung stellen jedoch Spezialverrichtungen dar, welche sowohl beim Einbau als auch in der Wartung besondere Anforderungen haben. Insbesondere führen die kombinierten Photovoltaik- und Photothermiesysteme dazu, dass bei einer entsprechenden Dacheindeckung gleichzeitig die Fähigkeiten von Dachdeckern, Elektrikern und Heizungsbauern zur korrekten Verbindung der Dacheindeckungselemente erforderlich werden. Ferner führt die Modulbauweise dazu, dass bei Reparaturen regelmäßig Dacheindeckungselemente vollständig ausgetauscht werden müssen, wobei sowohl elektrische Leitungen als auch Flüssigkeitsleitungen neu verbunden werden müssen und gegebenenfalls der Heizungskreislauf entlüftet werden muss. Dies ist umso gravierender, da die entsprechenden Module erheblichen Witterungseinflüssen ausgesetzt sind und, bspw. bei Hagel, lokal beschädigt werden können.

Weiter stellt sich im Stand der Technik das Problem, die Wärme effektiv zu den Photothermiesystemen zu leiten, ohne dass gleichzeitig eine Langlebigkeit der kombinierten Vorrichtungen beeinträchtigt wird. Häufig lässt sich nur bei einer gleichmäßigen Kühlung ohne ungekühlte Hotspots eine signifikante Effizienzsteigerung der Photovoltaik-Anlage erreichen. Dabei ist eine hohe Wärmeleitfähigkeit von Trägerelementen, wie Aluminiumblechen und -trägern, jedoch regelmäßig mit einer hohen thermischen Längenausdehnung verbunden, sodass Klebverbindungen und mechanische Schraubverbindungen zum Befestigen der Photovoltaikmodule hohen mechanischen Spannungen ausgesetzt sein können, welche durch die thermischen Gradienten in den kombinierten Photovoltaik- und Photothermiesystemen erhöht werden können. Energiemodule mit metallischer Unterkonstruktion in der Größe von herkömmlichen Photovoltaikmodulen regelmäßig mit einem Metall mit niedrigem Wärmeausdehnungskoeffizienten gefertigt, da auch in den Photovoltaikmodulen verwendetes Glas einen niedrigen Wärmeausdehnungskoeffizient besitzt, leiten jedoch Wärme nur in geringerem Ausmaß. Ferner wird in herkömmlichen Photovoltaik- und Photothermiesystemen häufig die Fläche der Photovoltaikmodule begrenzt, um mechanischen Spannungen gering zu halten.

In Anbetracht dieses Stands der Technik ist es eine Aufgabe der Erfindung, ein kombiniertes Photovoltaik- und Photothermiesystem bereitzustellen, welches sowohl den Einbau als auch die Wartung vereinfacht und einen verbesserten Wärmeabtransport aus den Photovoltaikmodulen erlaubt.

Diese Aufgabe wird erfindungsgemäß durch ein Verfahren und eine Solaranlage, insbesondere im Zusammenhang mit einem Dachaufbau und/oder einem Wandaufbau, zur kombinierten Strom- und Wärmeerzeugung nach den unabhängigen Ansprüchen bereitgestellt. Die abhängigen Ansprüche betreffen bevorzugte Ausführungsformen.

Gemäß einem ersten Aspekt bezieht sich die Erfindung auf ein Verfahren zum Bereitstellen einer Solaranlage, insbesondere eines Dachaufbaus oder eines Wandaufbaus, zur kombinierten Strom- und Wärmeerzeugung. Das Verfahren umfasst das Befestigen einer Unterkonstruktion auf einer tragenden Stützkonstruktion, wobei die Unterkonstruktion eine Mehrzahl parallel angeordneter wärmeleitender Hohlträger mit integrierten Kanälen für ein flüssiges Wärmeträgermedium umfasst, und wobei die wärmeleitenden Hohlträger Fluidanschlüsse umfassen, um das Wärmeträgermedium an einem ersten Ende der wärmeleitender Hohlträger einzuleiten und an einem zweiten gegenüberliegenden Ende der wärmeleitenden Hohlträger abzuleiten, wobei die wärmeleitenden Hohlträger als tragende Elemente entsprechend einer Dachlattung bzw. äußeren Lattung verlegt werden. Das Verfahren umfasst ferner das Befestigen mindestens eines wärmeleitenden Halteelements an den stützenden wärmeleitenden Hohlträgern der Unterkonstruktion, um eine wärmeleitende Stützfläche für Photovoltaikmodule zu bilden, welche über die wärmeleitenden Hohlträger thermisch mit den Kanälen gekoppelt ist. Ferner umfasst das Verfahren das Anbringen der Photovoltaikmodule auf dem mindestens einen wärmeleitenden Halteelement.

Mindestens ein lösbar angebrachtes Klemmelement befestigt die Photovoltaikmodule kraft- und/oder formschlüssig an dem mindestens einen wärmeleitenden Halteelement. Dabei weist das mindestens eine wärmeleitende Halteelement vorzugsweise eine Wärmeleitfähigkeit von mehr als 50 W/(m*K) auf, insbesondere mehr als 100 W/(m*K), bevorzugt mehr als 150 W/(m*K).

Durch die kraft- und/oder formschlüssige Anbringung des Photovoltaikmoduls an dem mindestens einen wärmeleitenden Halteelement mittels eines lösbaren Klemmelements können relative thermische Ausdehnungskoeffizienten des Photovoltaikmoduls, wie eines Glas-Glas Moduls, oder eines Glas-(Stahl)Blech-Moduls, und des wärmeleitenden Haltelements, wie ein Aluminiumblech, durch relative Verschiebung in der Stützebene kompensiert werden. Das Klemmelement kann also relative Bewegung der Photovoltaikmodule und des mindestens einen wärmeleitenden Halteelements in Folge von Wärmeausdehnung in der Stützebene zulassen. Entsprechend können in Ausführungsformen mechanische Spannungen an Befestigungselementen, wie Schrauben oder Nieten, welche die Photovoltaikmodule an den Halteelementen befestigen, oder Delamination der Photovoltaikmodule, z.B. im Fall von Klebverbindungen, verringert werden. Das Klemmelement kann als Klammerelement, wie ein Klemmwinkel, ausgestaltet werden, welches mit Befestigungselementen an den wärmeleitenden Halteelementen befestigt werden kann.

Ein flächiges Aufliegen der Photovoltaikmodule auf den wärmeleitenden Halteelementen kann gleichzeitig einen ausreichenden Wärmetransfer von dem Photovoltaikmodule zu den wärmeleitenden Hohlträgern erlauben. Das mindestens eine wärmeleitende Halteelement sollte also bevorzugt eine im Wesentlichen ebene wärmeleitende Stützfläche für die Photovoltaikmodule bilden.

Die Photovoltaikmodule können von mehreren Seiten durch lösbare Klemmelemente gehalten werden, und/oder können in eine Nut auf dem mindestens einen wärmeleitenden Halteelement eingeschoben werden und mit dem lösbaren Klemmelement befestigt werden. Das mindestens eine wärmeleitende Halteelement kann eine Mehrzahl von Durchbohrungen aufweisen, um die Klemmelemente an verschiedenen Positionen anzubringen, sodass Photovoltaikmodule unterschiedlicher Dimensionen aufgenommen werden können.

Das mindestens eine Klemmelement kann eine Kraft senkrecht zu der Stützfläche auf das Photovoltaikmodul ausüben, sodass das Photovoltaikmodul von dem mindestens einen Klemmelement gegen das mindestens eine wärmeleitende Halteelement gedrückt werden kann. Eine entsprechende senkrechte Klemmkraft kann eine thermische Kopplung zwischen dem Photovoltaikmodul und dem mindestens einen wärmeleitenden Halteelement sicherstellen. Zu diesem Zweck, kann das Klemmelement einen elastischen Abschnitt umfassen, wie einen elastischen Materialabschnitt, welcher auf eine Oberfläche der Photovoltaikmodule drückt.

Um einen ausreichenden Wärmeabtransport zu gewährleisten und/oder um lokale Hot-Spots zu vermeiden weist das wärmeleitenden Halteelement vorzugsweise eine Wärmeleitfähigkeit auf, welche größer ist als die von Edelstahl (z.B. V2A), d.h. mehr als ca. 15 W/(m*K), und insbesondere eine Wärmeleitfähigkeit von mehr als 50 W/(m*K), insbesondere mehr als 100 W/(m*K), bevorzugt mehr als 150 W/(m*K), wie im Fall von Aluminium, welches eine Wärmeleitfähigkeit zwischen etwa 75 W/(m*K) und etwa 235 W/(m*K) aufweisen kann, oder Kupfer.

Alternativ oder zusätzlich umfasst das mindestens eine wärmeleitende Halteelement eine flexible wärmeleitende Schicht und einen metallischen Trägerkörper zum Tragen der Photovoltaikmodule, wobei die wärmeleitende Schicht an dem metallischen Trägerkörper angebracht ist, sodass von den Photovoltaikmodulen erzeugte Wärme durch die wärmeleitende Schicht zu den wärmeleitenden Hohlträgern geleitet wird, wobei die wärmeleitende Schicht zwischen den wärmeleitenden Hohlträgern und dem metallischen Trägerkörper angeordnet ist.

Beispielsweise kann das Photovoltaikmodul einen metallischen Trägerkörper aus Stahl aufweisen, wie es für Glas-Blech-Module aus dem Stand der Technik bekannt ist, oder auf einem wärmeleitenden Halteelement aus Stahl aufgebracht sein. Die vergleichsweise niedrige Wärmeleitfähigkeit von Edelstahl kann anschließend durch die wärmeleitende Schicht zumindest teilweise kompensiert werden, welche beispielsweise als Folie rückseitig an dem metallischen Trägerkörper angebracht werden kann. In einigen Ausführungsformen ist eine Wärmeleitfähigkeit der wärmeleitenden Schicht größer als eine Wärmeleitfähigkeit des metallischen Trägerkörpers.

Die Anbringung der flexiblen wärmeleitenden Schicht zwischen dem metallischen Trägerkörper und den wärmeleitenden Hohlträgern kann eine Beschädigung der flexiblen wärmeleitenden Schicht durch direkte Witterungseinflüsse verringern und kann in Verbindung mit kommerziell erhältlichen Photovoltaikziegeln eingesetzt werden. Beispielsweise kann eine flexible wärmeleitende Folie, wie eine Graphitfolie, rückseitig auf ein Photovoltaikmodul mit metallischem Trägerkörper aufgeklebt werden, um einen Wärmeabtransport in der Stützebene zu erhöhen.

In bevorzugten Ausführungsformen grenzt die flexible wärmeleitende Schicht an die wärmeleitenden Hohlträger. Beispielsweise ist die flexible wärmeleitende Folie zumindest teilweise rückseitig auf eine von dem mindestens einen Halteelement gebildete Stützfläche aufgeklebt, um direkt an die wärmeleitenden Hohlträger anzugrenzen.

Die wärmeleitende Schicht deckt in einigen Ausführungsformen zumindest eine Fläche des metallischen Trägerkörpers ab, die den Photovoltaikmodulen entspricht. Beispielsweise kann die wärmeleitende Schicht, im Wesentlichen eine Fläche aufweisen, welche dem Halteelement entspricht, oder kann im Bereich der Photovoltaikmodule eine Fläche aufweisen, welche in der Projektion die Photovoltaikmodule im Wesentlichen überdeckt.

In bevorzugten Ausführungsformen umfasst die wärmeleitende Schicht Graphit, oder besteht vorwiegend aus Graphit. Beispielsweise besteht die wärmeleitenden Schicht zu mehr als 50% aus Graphit, oder mehr als 80%, wie 95% oder 99%. Alternativ oder zusätzlich weist die wärmeleitende Schicht eine Wärmeleitfähigkeit von mehr als 20 W/(m*K) auf, insbesondere mehr als 50 W/(m*K), bevorzugt mehr als 80 W/(m*K), wobei die wärmeleitende Schicht insbesondere eine Dicke zwischen 0,5 mm und 5 mm, zwischen 1 und 4 mm, oder ungefähr 2 mm, aufweist.

Beispielsweise kann eine Graphitfolie mit einer Wärmeleitfähigkeit von ca. 80 W/(m*K) und mehr, wie 120 W/(m*K) und mehr, insbesondere zwischen etwa 120 W/(m*K) und etwa 165 W/(m*K), auf dem metallischen Trägerkörper aufgebracht werden, um einen Wärmetransport zu dem wärmeleitenden Hohlträger zu erhöhen und/oder um Wärmediffusion in dem wärmeleitenden Halteelement zu unterstützen.

In bevorzugten Ausführungsformen ist die wärmeleitende Schicht zwischen den wärmeleitenden Hohlträgern und dem mindestens einen wärmeleitenden Halteelement angeordnet, wobei insbesondere eine zweite wärmeleitende Schicht zwischen dem mindestens einen wärmeleitenden Halteelement und den Photovoltaikmodulen angeordnet ist.

Beispielsweise kann die wärmeleitende Schicht rückseitig auf ein Blechdach und/oder rückseitig auf ein Photovoltaikmodul, welches zum Eindecken eines Dachs ausgebildet sein kann, aufgeklebt werden, um den Wärmeabtransport aus den Photovoltaikmodulen zu begünstigen.

Zusätzlich kann innerhalb eines Photovoltaikmoduls, welches einen metallischen Trägerkörper, bspw. aus Stahlblech aufweist, zwischen einer aktiven Schicht des Photovoltaikmoduls und dem metallischen Trägerkörper eine zweite wärmeleitende Schicht, wie eine Graphitschicht eingebracht werden, um einen Abtransport von Wärme aus dem Photovoltaikmodul weiter zu verbessern.

In einigen Ausführungsformen ist eine Graphitschicht zwischen dem mindestens einen wärmeleitenden Halteelement, beispielsweise einem Aluminiumblech, einem Titanzinkblech, einem Stahlblech oder einem Kupferblech, und einem Photovoltaikmodul angeordnet, um eine thermische Leitfähigkeit zwischen dem Photovoltaikmodul und dem wärmeleitenden Halteelement zu erhöhen und gleichzeitig thermische Spannungen zu begrenzen. Die Wärmeausdehnung von Graphit kann ähnlich oder kleiner als eine Wärmeausdehnung von Glas sein, sodass eine Delamination zwischen einem Photovoltaikmodul (mit oder ohne metallisches Trägerelement) und einer Graphitfolie reduziert werden kann. Die flexible Folie kann gleichzeitig zumindest teilweise thermische Spannungen zu dem darunterliegenden wärmeleitenden Halteelement kompensieren. Eine thermische Verbindung kann in solchen Fällen beispielsweise durch das zuvor beschriebene Klemmelement erhalten werden.

Das mindestens eine Halteelement kann Deckelemente eines Dachaufbaus oder eines Wandaufbaus bilden, um ein gebäudeintegriertes PVT-System bereitzustellen.

In bevorzugten Ausführungsformen ist die tragende Stützkonstruktion eine tragende Dachkonstruktion, wobei die wärmeleitenden Hohlträger die äußerste Dachlattung der Unterkonstruktion eines Dachaufbaus bilden, und wobei das Befestigen der mindestens eines wärmeleitenden Halteelements auf der Unterkonstruktion eine Dachdeckung bildet.

Alternativ oder zusätzlich kann das Verfahren das Befestigen einer Unterkonstruktion an einer tragenden Dachkonstruktion über Stützelemente umfassen, welche zur Befestigung der Unterkonstruktion über eine Dacheindeckung hinausragen.

In weiteren bevorzugten Ausführungsformen ist die tragende Stützkonstruktion eine tragende Wandkonstruktion. Die wärmeleitenden Hohlträger können die äußerste Lattung der Unterkonstruktion bilden, wobei das Befestigen des mindestens einen wärmeleitenden Halteelements auf der Unterkonstruktion eine Fassadenbekleidung bildet. Alternativ oder zusätzlich kann das Verfahren das Befestigen der Unterkonstruktion an der tragenden Wandkonstruktion über Stützelemente umfassen, welche zur Befestigung der Unterkonstruktion über eine Fassadenbekleidung hinausragen.

Entsprechend kann sich die Erfindung auf ein Verfahren zum Bereitstellen eines Dachaufbaus zur kombinierten Strom- und Wärmeerzeugung beziehen. Das Verfahren umfasst das Befestigen einer Unterkonstruktion auf einer tragenden Dachkonstruktion, wobei die Unterkonstruktion eine Mehrzahl parallel angeordneter wärmeleitender Hohlträger mit integrierten Kanälen für ein flüssiges Wärmeträgermedium umfasst und wobei die wärmeleitenden Hohlträger die äußerste Dachlattung der Unterkonstruktion bilden. Die wärmeleitenden Hohlträger umfassen Fluidanschlüsse, um das Wärmeträgermedium an einem ersten Ende der wärmeleitender Hohlträger einzuleiten und an einem zweiten gegenüberliegenden Ende der wärmeleitenden Hohlträger abzuleiten. Das Verfahren umfasst ferner das Befestigen mindestens eines wärmeleitenden Deckelements auf der Unterkonstruktion, um eine Dachdeckung zu bilden, welche über die wärmeleitenden Hohlträger thermisch mit den Kanälen gekoppelt ist, und das Anbringen von Photovoltaikmodulen auf dem mindestens einen wärmeleitenden Deckelement.

Durch das vorstehende Verfahren wird ein Wärmeträgerkreislauf in die Dachdeckung integriert. Gleichzeitig kann die Dachdeckung durch einen Dachdecker erfolgen, da zunächst die wärmeleitenden Hohlträger als tragende Elemente entsprechend einer Dachlattung verlegt werden können und anschließend mit etablierten Techniken eine wärmeleitende Dachdeckung, wie ein Blechdach, auf den wärmeleitenden Hohlträger montiert werden können.

Auf der Dachdeckung können Photovoltaikmodule befestigt werden, welche über das mindestens eine wärmeleitende Deckelement thermisch an die Kanäle gekoppelt sind. Entsprechend können die Photovoltaikmodule über ein Wärmeträgermedium in den Kanälen gekühlt werden, während der Rücklauf zur Versorgung von Verbrauchern in dem Gebäude genutzt werden kann.

Bei Beschädigungen der Dachdeckung oder der Photovoltaikmodule können die jeweiligen Elemente ausgetauscht werden, ohne dass der Wärmeträgerkreislauf unterbrochen oder neu verbunden werden muss. Stattdessen kann ein Austausch von Teilen der Dachdeckung bzw. der Photovoltaikmodule unabhängig von einem Dachdecker bzw. Elektriker durchgeführt werden. Ferner kann in dem Verfahren die Kühlleistung durch den Abstand zwischen den wärmeleitenden Hohlträgern beliebig eingestellt werden oder an eine gegebene Dachfläche angepasst werden. Das resultierende Verfahren erlaubt es daher eine anpassbare Kühlung in die Dachdeckung zu integrieren und dadurch ein modulares gebäudeintegriertes Photovoltaik- und Photothermiesystem auf einem Gebäudedach bereitzustellen.

In bevorzugten Ausführungsformen umfasst das Verfahren das Anschließen eines Fluidkreislaufs an die Fluidanschlüsse der wärmeleitenden Hohlträger zur Kühlung des mindestens einen wärmeleitenden Deckelements.

Das Anschließen des Fluidkreislaufs an die Fluidanschlüsse kann in einem getrennten Schritt vor oder nach dem Befestigen des mindestens einen Deckelements, bspw. durch einen Heizungsbauer, erfolgen, wobei die Kanäle der Hohlträger in geeigneter Weise mit einem Wärmeträgerkreislauf verbunden werden und das Dach geschlossen werden kann.

In bevorzugten Ausführungsformen umfasst das Verfahren ferner das Verbinden der Enden der Kanäle mehrerer der wärmeleitenden Hohlträger mit einer Verbindungsleitung, welche senkrecht zu den wärmeleitenden Hohlträgern verläuft.

Beispielsweise können die Kanäle jeweils benachbarter Paare wärmeleitenden Hohlträger an den gegenüberliegenden Enden versetzt miteinander verbunden werden, um einen mäandernden Pfad durch die wärmeleitenden Hohlträger zu definieren. Alternativ können eine Mehrzahl von Kanälen an ihren jeweiligen benachbarten Enden mit der Verbindungsleitung verbunden werden, um gemeinsame Zulauf- und Rücklaufleitungen an gegenüberliegenden Enden der Hohlträger zu definieren.

In bevorzugten Ausführungsformen definiert die Dachkonstruktion ein Schrägdach und die Mehrzahl parallel angeordneter wärmeleitender Hohlträger werden senkrecht oder parallel zur Firstlinie desselben befestigt.

Die Dachkonstruktion kann als Tragwerk eines Daches verstanden werden, während die Dachdeckung vor Niederschlag, Wind und Sonne schützt und an dem Schrägdach Regen konstruktiv über die Dachneigung ableiten kann. Die Firstlinie ist eine meist waagerechte obere Kante des Daches. Der Fachmann erkennt hierbei, dass bei Schrägdächern, wie Pult-, Sattel-, Frack- oder Walmdächern, nicht jede der Dachflächen durch eine Dachdeckung aus dem mindestens einen wärmeleitenden Deckelement ausgebildet sein muss. Stattdessen ist es möglich, nur eine oder mehrere der Sonne zugewandte Dachflächen mit dem zuvor beschrieben Dachaufbau auszustatten, während andere Dachflächen mit herkömmlichen (Blech-)Dachdeckungen eingedeckt werden können.

Die Fluidanschlüsse können, bspw. abhängig davon, ob die wärmeleitenden Hohlträger senkrecht oder parallel zur Firstlinie verlaufen, im Bereich des Firsts/der Traufe oder im Bereich des Ortgangs mit einem Fluidkreislauf verbunden werden. Der Fachmann erkennt dabei, dass das erste Ende und das zweite Ende der Hohlträger erste und zweite gegenüberliegende Stirnflächen darstellen können, um eine möglichst einfache Konstruktion der wärmeleitenden Hohlträger zu ermöglichen. Jedoch können das jeweilige erste und zweite Ende auch versetzt zu den Stirnflächen der Hohlträger angeordnet sein, bspw. durch Bohrungen in den Hohlträgern, welche die integrierten Kanäle mit einer Seitenfläche des Hohlträgers verbinden, um einen Zugang zu den Fluidanschlüssen bei der Konstruktion des Dachaufbaus zu vereinfachen.

In bevorzugten Ausführungsformen umfasst das Verfahren das Befestigen der wärmeleitenden Hohlträger auf der Sparrenlage der tragenden Dachkonstruktion oder auf einer unteren Dachlattung über der Sparrenlage.

Ein herkömmlicher Dachaufbau besteht in der Unterkonstruktion aus zwei senkrecht zueinander liegenden Holzlattungen. Das Befestigen der wärmeleitenden Hohlträger direkt auf den Sparren der Dachkonstruktion oder einer unteren Dachlattung über der Sparrenlage, bspw. je nach gewünschter Orientierung der wärmeleitenden Hohlträger, kann ein Gesamtgewicht der Dachhaut minimieren und die wärmeleitenden Hohlträger in herkömmliche Dachaufbaukonstruktionen integrieren. Dies kann beispielsweise eine Aufstockung auch bei statisch schwachen Häusern erlauben, bei einer gleichzeitigen Gewichtsreduktion durch Entfernen der alten Dachziegel.

Der Fachmann erkennt in diesem Zusammenhang, dass auf oder über der Sparrenlage zusätzliche Abdichtungsschichten, wie eine Unterspannbahn, eine Trennschicht und/oder eine (Holz-)Schalung, angeordnet sein können, um bspw. Kondensfeuchtigkeit abzuleiten oder Geräusche abzuschirmen. Gleichzeitig sollten jedoch die wärmeleitenden Deckelemente direkt an den wärmeleitenden Hohlträgern befestigt sein, um einen maximalen Wärmetransfer von der Dachdeckung hin zu dem Wärmeträger zu ermöglichen.

Raumabschnitte zwischen den wärmeleitenden Hohlträgern können zur Hinterlüftung der Dachdeckung verwendet werden. Vorzugsweise ist zwischen der Sparrenlage und den wärmeleitenden Hohlträger eine Trennschicht angeordnet, um ein Eindringen von Kondensfeuchtigkeit in den Bereich der Sparren verhindern zu können. Zwischen den Sparren kann ferner mit bekannten Methoden eine Dämmung angebracht werden, sodass die wärmeleitenden Hohlträger und das mindestens eine Deckelement thermisch von dem Gebäudeinnenraum isoliert werden können. Entsprechend kann die Konstruktion mithilfe der wärmeleitenden Hohlträger und dem mindestens einen wärmeleitenden Deckelement dazu genutzt werden, um ein Kaltdach bereitzustellen, wobei die bei Blechdächern übliche höhere Wärmeleitfähigkeit vorteilhaft genutzt werden kann, um die auf den Deckelementen befestigten Photovoltaikmodule zu kühlen.

In bevorzugten Ausführungsformen verlaufen die Mehrzahl parallel angeordneter wärmeleitender Hohlträger im Wesentlichen durchgehend über eine Dachfläche und verlaufen vorzugsweise im Wesentlichen durchgehend vom First bis zur Traufe der Dachkonstruktion.

Eine durchgehende Konstruktion der wärmeleitenden Hohlträgern verringert die Anzahl notwendiger Fluidverbindungen zu den Kanälen unterschiedlicher Hohlträger und kann eine einfachere Trennung konstruktiver Schritte erlauben, welche durch Dachdecker oder Heizungsbauer durchgeführt werden.

In bevorzugten Ausführungsformen wird das mindestens eine wärmeleitende Deckelement an der Unterkonstruktion derart befestigt, dass das mindestens eine wärmeleitende Deckelement mehrere der wärmeleitenden Hohlträger überlagert.

Im Prinzip kann ein einziges Blechdachelement, wie ein Trapezblech, verwendet werden, welches an den darunterliegenden wärmeleitenden Hohlträgern befestigt wird, um eine Dachdeckung zu bilden. Dem Fachmann ist darüber hinaus bekannt, verschiedene Blechelemente, bspw. formschlüssig über Falzungen, miteinander zu verbinden und entsprechend kann ein solches zusammengesetztes Deckelement an einer Mehrzahl von parallelen wärmeleitenden Hohlträgern befestigt werden.

In bevorzugten Ausführungsformen umfasst das Verfahren ferner das Befestigen einer Mehrzahl wärmeleitender Deckelemente auf den jeweiligen wärmeleitenden Hohlträgern, wobei die Mehrzahl wärmeleitender Deckelemente entlang einer Längsrichtung der Kanäle auf den wärmeleitenden Hohlträgern verteilt angeordnet sind.

In anderen Worten kann ein Deckelement mehrere Hohlträger bedecken, und/oder ein Hohlträger kann sich unter einer Mehrzahl von Deckelementen erstrecken, sodass ein modulares System zum Bilden einer thermisch mit einem Wärmeträgermedium gekoppelten Dachdeckung erhalten wird. Dies kann es zum einen erlauben, die Form und den Aufbau der Dachdeckung freier zu wählen, und zum anderen erlauben, die Stabilität der Dachhaut zu erhöhen, da jedes Einzelteil mit einer Vielzahl von anderen Einzelteilen verbunden werden kann.

In bevorzugten Ausführungsformen sind die wärmeleitenden Hohlträger und das mindestens eine wärmeleitende Deckelement getrennt gefertigt.

Die Verbindung zwischen den wärmeleitenden Hohlträgern und dem mindestens einen wärmeleitenden Deckelement kann über Befestigungselemente erfolgen, bspw. Schrauben, Nieten etc., oder kann über formschlüssigen oder kraftschlüssigen Eingriff, wie über Falzungen erfolgen. Bevorzugt ist das mindestens eine wärmeleitende Deckelement lösbar an den wärmeleitenden Hohlträgern befestigt, um eine Wartung der Dachhaut und den Austausch einzelner Elemente zu vereinfachen. Der Fachmann erkennt dabei, dass die Befestigung des mindestens einen wärmeleitenden Deckelements an den wärmeleitenden Hohlträgern grundsätzlich vor oder nach der Befestigung der Unterkonstruktion an der tragenden Dachkonstruktion erfolgen kann, d.h. es können auch vormontierte Kombinationen aus wärmeleitende Deckelementen und wärmeleitenden Hohlträgern gemeinsam montiert werden, um die Dachdeckung zu standardisieren oder schneller durchführen zu können.

In bevorzugten Ausführungsformen ist oder bildet das mindestens eine wärmeleitende Deckelement ein Blechdach, insbesondere ein Blechdach aus Aluminium, Edelstahl, Kupfer, verzinktes Stahlblech oder Titanzink.

Beispielsweise kann eine Mehrzahl von Blechscharen über Falzungen miteinander verbunden werden, um eine wärmeleitende Dachdeckung für die Montage der Photovoltaikmodule zu bilden.

Das mindestens eine wärmeleitende Deckelement kann vorstehende Abschnitte, wie Trapezabschnitte oder Falzungen umfassen, und die Photovoltaikmodule können zwischen den vorstehenden Abschnitten montiert werden. Beispielsweise können vormontierte Photovoltaikmodule auf dem mindestens einen wärmeleitenden Deckelement auflaminiert sein und gemeinsam mit dem mindestens einen wärmeleitenden Deckelement auf den wärmeleitenden Hohlträgern befestigt werden. Ferner können die Photovoltaikmodule auch nachträglich durch lösbare Verbindungen an dem mindestens einen wärmeleitenden Deckelement befestigt werden.

Gemäß einem zweiten Aspekt bezieht sich die Erfindung auf eine Solaranlage, insbesondere für ein Gebäudedach oder eine Gebäudewand, zur kombinierten Strom- und Wärmeerzeugung. Die Solaranlage umfasst eine Mehrzahl parallel angeordneter wärmeleitender Hohlträger mit integrierten Kanälen für ein flüssiges Wärmeträgermedium, wobei die wärmeleitenden Hohlträger Fluidanschlüsse umfassen, um das Wärmeträgermedium an einem ersten Ende der wärmeleitender Hohlträger einzuleiten und an einem zweiten gegenüberliegenden Ende der wärmeleitenden Hohlträger abzuleiten. Die Solaranlage umfasst ferner mindestens ein wärmeleitendes Halteelement, welches lösbar an mindestens zwei der wärmeleitenden Hohlträger befestigt ist, um eine wärmeleitende Stützfläche zu bilden, welche über die wärmeleitenden Hohlträger thermisch mit den Kanälen gekoppelt ist, wobei die Solaranlage ferner Querträger umfasst, welche sich in einem von Null verschiedenen Winkel zu den wärmeleitenden Hohlträgern erstrecken, und welche auf einer der Stützfläche gegenüberliegenden Seite mit mindestens zwei der wärmeleitenden Hohlträger verbunden sind, um eine Trägerkonstruktion zur Stütze des mindestens einen wärmeleitenden Halteelements zu bilden, und mindestens ein Photovoltaikmodul auf dem mindestens einen wärmeleitenden Halteelement.

Mindestens ein lösbar angebrachtes Klemmelement befestigt die Photovoltaikmodule kraft- und/oder formschlüssig an dem mindestens einen wärmeleitenden Halteelement, wobei das mindestens eine wärmeleitende Halteelement vorzugsweise eine Wärmeleitfähigkeit von mehr als 50 W/(m*K) aufweist, insbesondere mehr als 100 W/(m*K), bevorzugt mehr als 150 W/(m*K).

Alternativ oder zusätzlich umfasst das mindestens eine wärmeleitende Halteelement eine flexible wärmeleitende Schicht und einen metallischen Trägerkörper zum Tragen der Photovoltaikmodule, wobei die wärmeleitende Schicht an dem metallischen Trägerkörper angebracht ist, sodass von den Photovoltaikmodulen erzeugte Wärme durch die wärmeleitende Schicht zu den wärmeleitenden Hohlträgern geleitet wird, wobei die wärmeleitende Schicht zwischen den wärmeleitenden Hohlträgern und dem metallischen Trägerkörper angeordnet ist.

Das mindestens eine wärmeleitende Halteelement bildet vorzugsweise eine im Wesentlichen durchgehende Auflagefläche für die Photovoltaikmodule, sodass Wärme von den Photovoltaikmodulen in der Auflagefläche von dem mindestens einen wärmeleitenden Halteelement aufgenommen und zu den wärmeleitenden Hohlträgern geleitet werden kann.

In bevorzugten Ausführungsformen bilden die wärmeleitenden Hohlträger die äußerste Dachlattung der Unterkonstruktion eines Dachaufbaus, und das mindestens eine wärmeleitende Halteelement bildet eine Dachdeckung.

Alternativ oder zusätzlich können die wärmeleitenden Hohlträger die äußerste Lattung der Unterkonstruktion eines Wandaufbaus bilden, und das mindestens eine wärmeleitende Halteelement bildet eine Fassadenbekleidung.

Entsprechend kann sich die Erfindung auf einen Dachaufbau zur kombinierten Strom- und Wärmeerzeugung beziehen. Der Dachaufbau umfasst eine Mehrzahl parallel angeordneter wärmeleitender Hohlträger mit integrierten Kanälen für ein flüssiges Wärmeträgermedium, wobei die Mehrzahl parallel angeordneter wärmeleitender Hohlträger die äußerste Dachlattung des Dachaufbaus bilden. Die Kanäle verlaufen entlang der Längsrichtung der Hohlträger, und die wärmeleitenden Hohlträger umfassen Fluidanschlüsse, um das Wärmeträgermedium an einem ersten Ende der wärmeleitender Hohlträger einzuleiten und an einem zweiten gegenüberliegenden Ende der wärmeleitender Hohlträger abzuleiten. Der Dachaufbau umfasst ferner mindestens ein wärmeleitendes Deckelement, welches an der Mehrzahl wärmeleitender Hohlträger befestigt ist und mit der Mehrzahl wärmeleitender Hohlträger thermisch gekoppelt ist, sodass eine thermisch mit den Kanälen gekoppelte Dachdeckung zur Montage von Photovoltaikmodulen gebildet wird.

Der Fachmann erkennt in diesem Zusammenhang, dass die thermische Leitfähigkeit und die thermische Kopplung der wärmeleitenden Hohlträger und des mindestens einen wärmeleitenden Deckelements derart gestaltet sein sollte, dass die Photovoltaikmodule in wirtschaftlich sinnvoller Weise über die Kanäle gekühlt werden können, bspw. mit einem Kühlmittel mit einer Temperatur von ca. 10 °C, und/oder dass Wärme, welche über das Photovoltaikmodul oder direkt durch die Sonneneinstrahlung die Dachdeckung erwärmt in wirtschaftlich sinnvoller Weise abgeleitet werden kann, um diese für Verbraucher in dem Gebäude bereitzustellen. Beispielsweise wird in Ausführungsformen durch die thermische Kopplung ein Wärmedurchgangskoeffizient vom 10 W/(m²K) oder mehr, vorzugsweise 40 W/(m²K) oder mehr, in Bezug auf die auf der Dachdeckung montierten Photovoltaikmodule erzielt. Vorzugsweise stellen die wärmeleitenden Hohlträger im Wesentlichen ebene Befestigungsflächen bereit und das mindestens eine wärmeleitende Deckelement wird auf den ebenen Befestigungsflächen über eine Mehrzahl von Befestigungselementen in physischem Kontakt mit den wärmeleitenden Hohlträgern gehalten.

In bevorzugten Ausführungsformen sind die Mehrzahl wärmeleitender Hohlträger metallische Hohlträger, insbesondere Hohlträger aus Aluminium und vorzugsweise Strangpressprofile aus Aluminium.

In bevorzugten Ausführungsformen umfasst das mindestens eine wärmeleitende Deckelement ein metallisches Blechelement.

In bevorzugten Ausführungsformen überlagert das mindestens eine wärmeleitende Deckelement mehrere der wärmeleitenden Hohlträger.

In bevorzugten Ausführungsformen sind das mindestens eine wärmeleitende Deckelement und die Mehrzahl wärmeleitender Hohlträger getrennt gefertigt.

In bevorzugten Ausführungsformen umfasst die Dachlattung eine untere Lattenkonstruktion mit einer Mehrzahl paralleler unterer Dachlatten und die Mehrzahl wärmeleitender Hohlträger auf den unteren Dachlatten befestigt sind, wobei die wärmeleitenden Hohlträger senkrecht zu den unteren Dachlatten verlaufen.

In bevorzugten Ausführungsformen ist der Dachaufbau Teil eines Schrägdaches, und wobei die wärmeleitenden Hohlträger senkrecht oder parallel zur Firstlinie verlaufen.

In bevorzugten Ausführungsformen verlaufen die Mehrzahl parallel angeordneter wärmeleitender Hohlträger im Wesentlichen durchgehend über eine Dachfläche und verlaufen vorzugsweise im Wesentlichen durchgehend vom First bis zur Traufe der Dachkonstruktion.

In bevorzugten Ausführungsformen ist die Dachlattung an einer Sparrenlage befestigt.

Entsprechend kann sich die Erfindung auf ein Gebäudeintegriertes PVT-System zur kombinierten Strom- und Wärmeerzeugung beziehen umfassend den Dachaufbau gemäß dem Vorstehenden und eine Mehrzahl von Photovoltaikmodulen, welche auf dem Dachaufbau befestigt oder befestigbar sind, sodass die Mehrzahl von Photovoltaikmodulen durch den Durchfluss des Wärmeträgermediums kühlbar sind.

In bevorzugten Ausführungsformen sind die Photovoltaikmodule auf dem mindestens einen wärmeleitenden Deckelement auflaminiert.

In einigen Ausführungsformen sind die Photovoltaikmodule auf dem mindestens einen wärmeleitenden Deckelement lösbar mittels Befestigungselementen montiert.

Eine lösbare Verbindung zwischen dem mindestens einen Deckelement und den Photovoltaikmodulen kann es erlauben, die Photovoltaikmodule leichter auszutauschen, bspw. bei deutlichen technologischen Fortschritten oder Beschädigung einzelner Photovoltaikmodule. Beispielsweise kann das mindestens eine wärmeleitende Deckelement Bohrungen in einem regelmäßigen Muster umfassen, um Photovoltaikmodule über Befestigungsmittel an dem mindestens einen wärmeleitenden Deckelement zu befestigen.

Ferner kann sich die Erfindung auf einen Wandaufbau zur kombinierten Strom- und Wärmeerzeugung in einer Gebäudewand beziehen. Der Wandaufbau umfasst eine Mehrzahl parallel angeordneter wärmeleitender Hohlträger mit integrierten Kanälen für ein flüssiges Wärmeträgermedium, wobei die Mehrzahl parallel angeordneter wärmeleitender Hohlträger eine äußere Lattung des Wandaufbaus bilden. Die Kanäle verlaufen entlang der Längsrichtung der Hohlträger, und die wärmeleitenden Hohlträger umfassen Fluidanschlüsse, um das Wärmeträgermedium an einem ersten Ende der wärmeleitender Hohlträger einzuleiten und an einem zweiten gegenüberliegenden Ende der wärmeleitender Hohlträger abzuleiten. Der Wandaufbau umfasst ferner mindestens ein wärmeleitendes Deckelement, welches an der Mehrzahl wärmeleitender Hohlträger befestigt ist und mit der Mehrzahl wärmeleitender Hohlträger thermisch gekoppelt ist, sodass eine thermisch mit den Kanälen gekoppelte Fassadenbekleidung zur Montage von Photovoltaikmodulen gebildet wird.

Der Wandaufbau kann es, analog zu dem zuvor beschriebenen Dachaufbau, erlauben, ein gebäudeintegriertes PVT-System zur kombinierten Strom- und Wärmeerzeugung bereitzustellen, wobei die kühlende Verkleidung gleichermaßen modular gestaltet ist, um die Konstruktion und die Wartung zu vereinfachen. Der Wandaufbau kann eine beliebige Kombination der zuvor beschriebenen Elemente oder Konfigurationen des Dachaufbaus enthalten. Bevorzugt umfasst der Wandaufbau metallische Hohlträger als wärmeleitende Hohlträger und mindestens ein daran befestigtes, getrennt gefertigtes Metallblech als mindestens ein wärmeleitendes Deckelement.

Die aus dem mindestens einen Deckelement und der Mehrzahl wärmeleitender Hohlträger gebildete Außenschale kann ein tragendes Element einer Gebäudewand sein, sie kann jedoch gleichermaßen nur eine im Wesentlichen selbsttragende Wandschale bilden, welche über dem Tragwerk des Gebäudes befestigt werden kann und welche statisch nicht belastet sein kann. Vorzugsweise ist die Außenschale Teil einer mehrschaligen Gebäudewand, und kann eine vorgehängte hinterlüftete Fassade oder eine Vorhangfassade bilden. Die wärmeleitenden Hohlträger können in diesem Zusammenhang einen Teil einer Unterkonstruktion des Wandaufbaus für die Befestigung der wärmeleitenden Fassadenbekleidung bilden.

Die Mehrzahl parallel angeordneter wärmeleitender Hohlträger können auf Gebäudeankern einer tragenden Wandschale, wie dem Tragwerk des Gebäudes, angebracht werden und das wärmeleitende Deckelement kann auf den wärmeleitenden Hohlträgern befestigt werden, um die Gebäudewand abzuschließen. Die Mehrzahl parallel angeordneter wärmeleitender Hohlträger kann beispielsweise auf einer unteren Lattung oder Mauerankern über dem Tragwerk befestigt werden. Somit kann eine leichte und kompakte Konstruktion erzielt werden.

Vorzugsweise sind die wärmeleitenden Hohlträger im Wesentlichen durchgehende Träger, welche über die Fläche der Außenschale durchgehend verlaufen. Der Fachmann erkennt jedoch, dass sich die Außenschale nicht notwendigerweise über die gesamte Fläche der Gebäudewand erstrecken muss. Vielmehr kann die Außenschale eine mit Photovoltaikmodulen zu bedeckende aktive Kühlfläche der Außenwand bilden, wobei beispielsweise ein unterer Abschnitt der Wand, wie ein unteres Stockwerk, oder Wandabschnitte/Öffnungen für Fenster ausgenommen sein können oder abweichend ausgebildet sein können. Die wärmeleitenden Hohlträger können vertikal oder horizontal entlang der Gebäudeaußenwand verlaufen. Entsprechend können die Fluidanschlüsse im Bereich der Kanten der aktiven Kühlfläche, wie im Bereich des Dachs oder der Gebäudekanten, mit einem Fluidkreislauf verbunden werden, um eine Wartung zu vereinfachen.

Die Außenschale kann zur Aufstockung einer bestehenden Gebäudewand verwendet werden oder kann in den Konstruktionsprozess eines Wandaufbaus eingebunden werden. Zwischen den wärmeleitenden Hohlträgern und dem Tragwerk des Gebäudes können Isolations- und/oder Abdichtungsschichten angeordnet werden, um einen Wärmetransfer oder Feuchtigkeitstransfer von der Außenwand in das Gebäudeinnere zu verhindern. Freiräume zwischen den parallel angeordneten wärmeleitenden Hohlträgern können zur Hinterlüftung der Fassadenbekleidung geeignet sein und genutzt werden. Das mindestens eine wärmeleitende Deckelement kann die Außenwand als Fassadenbekleidung über der Mehrzahl von metallischen Hohlträgern abschließen und eine konstruktive Abdichtung der Außenwand gegenüber Wind und Regen erlauben. Somit kann ein kompakter Wandaufbau mit einer wärmeleitenden Außenschale erhalten werden, welcher es erlaubt, Wärme von an der Gebäudeaußenwand befestigten Photovoltaikmodulen abzuleiten.

Entsprechend kann sich die Erfindung auf ein gebäudeintegriertes PVT-System zur kombinierten Strom- und Wärmeerzeugung beziehen umfassend den Wandaufbau gemäß dem Vorstehenden und ferner eine Mehrzahl von Photovoltaikmodulen, welche auf dem Wandaufbau befestigt oder befestigbar sind, sodass die Mehrzahl von Photovoltaikmodulen durch den Durchfluss des Wärmeträgermediums kühlbar sind.

Das gebäudeintegrierte PVT-System bzw. der Wandaufbau können bereitgestellt werden, indem ausgehend von einer Konstruktion einer tragenden Wandschale mit Gebäudeankern, wie einer unteren Lattung, die wärmeleitender Hohlträger parallel zueinander an den Gebäudeankern befestigt werden. An den wärmeleitenden Hohlträgern kann das mindestens eine wärmeleitende Deckelement, wie Metallbleche mit vormontierten Photovoltaikmodulen, befestigt werden. Vor oder nach der Befestigung des mindestens einen wärmeleitenden Deckelements können die Fluidanschlüsse der Metallträger mit einem Wärmeträgerkreislauf verbunden werden. Schließlich können, soweit diese nicht bereits vormontiert waren, Photovoltaikmodule auf dem mindestens einen wärmeleitenden Deckelement befestigt werden und mit einem gebäudeinternen Stromkreislauf verbunden werden.

Entsprechend kann sich die Erfindung entsprechend auf ein Verfahren zum Bereitstellen eines Wandaufbaus zur kombinierten Strom- und Wärmeerzeugung beziehen. Das Verfahren umfasst das Befestigen einer Unterkonstruktion auf einer tragenden Wandkonstruktion, wobei die Unterkonstruktion eine Mehrzahl parallel angeordneter wärmeleitender Hohlträger mit integrierten Kanälen für ein flüssiges Wärmeträgermedium umfasst und wobei die wärmeleitenden Hohlträger die äußerste Lattung der Unterkonstruktion bilden. Die wärmeleitenden Hohlträger umfassen Fluidanschlüsse, um das Wärmeträgermedium an einem ersten Ende der wärmeleitender Hohlträger einzuleiten und an einem zweiten gegenüberliegenden Ende der wärmeleitenden Hohlträger abzuleiten. Das Verfahren umfasst ferner das Befestigen mindestens eines wärmeleitenden Deckelements auf der Unterkonstruktion, um eine Fassadenbekleidung zu bilden, welche über die wärmeleitenden Hohlträger thermisch mit den Kanälen gekoppelt ist, und das Anbringen von Photovoltaikmodulen auf dem mindestens einen wärmeleitenden Deckelement.

Die vorstehende Beschreibung zeigt verschiedene Aspekte der Erfindung, welche die Integration einer kombinierten Photovoltaik- und Photothermieanlage in eine Gebäudehülle erlauben. Bei bestehenden Dach- oder Wandaufbauten kann die Erfindung jedoch auch dadurch implementiert werden, dass die wärmeleitenden Hohlträger über Stützelemente, wie Dach- oder Wandhaken, außerhalb der Gebäudehülle angebracht werden.

Entsprechend kann sich die Erfindung auf ein Verfahren zum Bereitstellen einer Solaranlage an einem Gebäudedach oder an einer Gebäudewand zur kombinierten Strom- und Wärmeerzeugung beziehen. Das Verfahren umfasst das Befestigen einer Unterkonstruktion an einer tragenden Dach- oder Wandkonstruktion über Stützelemente, welche zur Befestigung der Unterkonstruktion über eine Dacheindeckung oder Fassadenbekleidung hinausragen. Die Unterkonstruktion umfasst eine Mehrzahl parallel angeordneter wärmeleitender Hohlträger mit integrierten Kanälen für ein flüssiges Wärmeträgermedium, und die wärmeleitenden Hohlträger umfassen Fluidanschlüsse, um das Wärmeträgermedium an einem ersten Ende der wärmeleitender Hohlträger einzuleiten und an einem zweiten gegenüberliegenden Ende der wärmeleitenden Hohlträger abzuleiten. Das Verfahren umfasst ferner das Befestigen mindestens eines wärmeleitenden Halteelements auf der Unterkonstruktion, um eine wärmeleitende Stützfläche zu bilden, welche über die wärmeleitenden Hohlträger thermisch mit den Kanälen gekoppelt ist, und das Anbringen von Photovoltaikmodulen auf dem mindestens einen wärmeleitenden Halteelement.

Das Verfahren erlaubt es, eine bestehende Gebäudehülle auf einfache Weise mit einer kombinierten Solaranlage nachzurüsten. Das Verfahren hat den Vorteil, dass mit dem Befestigen der wärmeleitenden Hohlträger über der Dacheindeckung oder Fassadenbekleidung eine strukturelle Stütze angebracht wird, welche vor der Montage der Photovoltaikmodule montiert werden kann. Dies kann es auch erlauben, die integrierten Kanäle unabhängig von den montierten Photovoltaikmodulen, bspw. bereits vor deren Montage, mit einem Kühl-/Heizungskreislauf zu verbinden. An den wärmeleitenden Hohlträgern können wärmeleitende Halteelemente mit oder ohne vormontierte Photovoltaikmodule lösbar befestigt werden. Schließlich können die Photovoltaikmodule montiert und/oder elektrisch an einen Stromkreislauf angeschlossen werden.

Die Konstruktion und das Verfahren erlauben es dabei, dass beteiligte Gewerke, wie Heizungsbauer, Dachdecker und Elektriker sowohl bei der Montage als auch bei möglichen Reparaturen im Wesentlichen unabhängig voneinander arbeiten können. Insbesondere können durch die lösbare Verbindung der wärmeleitenden Halteelemente und den wärmeleitenden Hohlträgern einzelne Photovoltaikmodule leicht ausgetauscht werden, ohne dass die Expertise von Heizungsbauern notwendig wäre. In anderen Worten wird die Kühlung in das Montagesystem integriert, sodass die Photovoltaikmodule getrennt von der Kühlung installiert und gewartet werden können.

In einigen Ausführungsformen umfasst das Verfahren das Anschließen eines Fluidkreislaufs an die Fluidanschlüsse der wärmeleitenden Hohlträger zur Kühlung des mindestens einen wärmeleitenden Halteelements.

Die wärmeleitenden Hohlträger erstrecken sich dabei vorzugsweise über eine Mehrzahl von Photovoltaikmodulen, sodass weniger Fluidanschlüsse notwendig sind, und vorzugsweise nur in Randbereichen der Solaranlage vorhanden sind. Insbesondere kann im Gegensatz zu herkömmlichen kombinierten PVT-Systemen auf die Verbindung der Fluidkreisläufe von Untermodulen der Solaranlage weitgehend verzichtet werden, da die wärmleitenden Hohlträger eine Mehrzahl von Photovoltaikmodulen überspannen und kühlen können. Dadurch wird erreicht, dass sämtliche hydraulischen Anschlüsse jeweils nur am Rand des Daches oder der Wand, oder bei längeren Dächern/Wänden, in gezielten Regionen vorgesehen bleiben können, und damit einer Reparatur zugänglich sind. Insbesondere kann die Anzahl der Flüssigkeitsanschlüsse kleiner als die Anzahl der Photovoltaikmodule sein. Entsprechend kann ein Risiko von Leckagen des Kühlkreislaufs verringert werden und Wartungsarbeiten können vereinfacht werden.

In bevorzugten Ausführungsformen umfasst die Unterkonstruktion Querträger, welche insbesondere zwischen den Stützelementen und den wärmeleitenden Hohlträgern angeordnet sind, welche sich in einem von Null verschiedenen Winkel, insbesondere im Wesentlichen senkrecht, zu den wärmeleitenden Hohlträgern erstrecken, und welche mit mindestens zwei der wärmeleitenden Hohlträger verbunden sind.

Die Querträger können bei ausgedehnten wärmeleitenden Hohlträgern begünstigen, dass die wärmeleitenden Hohlträger auch lokal im Wesentlichen parallel zueinander verlaufen, sodass ein optimaler Wärmetransfer zwischen den wärmeleitenden Halteelementen und den wärmeleitenden Hohlträgern und/oder verringerte mechanische Spannungen auf die Photovoltaikmodule erreicht werden können.

In bevorzugten Ausführungsformen erstrecken sich die Querträger im Wesentlichen über eine Breite eines wärmeleitenden Halteelements oder ein Vielfaches der Breite der wärmeleitenden Halteelemente, sodass die wärmeleitenden Halteelemente eine im Wesentlichen ebene Stützfläche für die Photovoltaikmodule bilden.

Beispielsweise kann auf jedem der wärmeleitenden Halteelemente ein Photovoltaikmodul angebracht sein, und jeweils zwei der Querträger und zwei der wärmeleitenden Hohlträger können eine im Wesentlichen ebene, insbesondere rechteckige, Unterkonstruktion zur Stütze der Halteelemente bilden, sodass das Photovoltaikmodul im Wesentlichen flach auf dem Halteelement aufliegen kann.

Mit einer im Wesentlichen ebenen Stützfläche können die Photovoltaikmodule auch durch Kraft- und/oder Formschluss an den Halteelementen befestigt werden, während gleichzeitig ein vergleichsweise hoher Wärmetransfer möglich bleibt. Eine solche Befestigung kann die Befestigung und/oder den Austausch von Photovoltaikelementen vereinfachen, zumindest im Vergleich zu einer stoffschlüssigen Verbindung, wie einem Auflaminieren der Photovoltaikelemente.

Beispielsweise können die Halteelemente Klammerelemente und/oder Nuten zum Aufnehmen von Photovoltaikmodulen aufweisen, um die Photovoltaikmodule kraft- und/oder formschlüssig an den Halteelementen zu befestigen.

Eine Befestigung der Halteelemente auf einer im Wesentlichen ebenen Stützfläche kann jedoch auch bei auflaminierten Photovoltaikelementen Vorteile haben, da mechanische Spannungen verringert werden können.

Das mindestens eine wärmeleitende Halteelement ist vorzugsweise im Wesentlichen plattenförmig und kann ein im Wesentlichen flächiges Element bilden, welches mindestens 40%, insbesondere mindestens 60%, vorzugsweise mindestens 80%, der Rückseite des Photovoltaikmoduls überlappt. Entsprechend kann Wärme des Photovoltaikmoduls effektiv über die von dem mindestens einen wärmeleitenden Haltelement gebildeten Stützfläche zu den integrierten Kanälen der wärmeleitenden Hohlträger abgeführt werden.

Die thermische Kopplung zum wärmeabführenden System kann mechanisch durch das Aufpressen der plattenförmigen Halteelemente auf das Trägersystem erfolgen. Entsprechend kann ein Wärmeabtransfer der Solaranlage in ein Montagesystem für die Befestigung der Photovoltaikmodule an einer Gebäudehülle integriert werden.

Ferner kann sich die Erfindung auf eine Solaranlage für ein Gebäudedach oder eine Gebäudewand zur kombinierten Strom- und Wärmeerzeugung beziehen. Die Solaranlage umfasst eine Mehrzahl parallel angeordneter wärmeleitender Hohlträger mit integrierten Kanälen für ein flüssiges Wärmeträgermedium, wobei die wärmeleitenden Hohlträger Fluidanschlüsse umfassen, um das Wärmeträgermedium an einem ersten Ende der wärmeleitender Hohlträger einzuleiten und an einem zweiten gegenüberliegenden Ende der wärmeleitenden Hohlträger abzuleiten. Die Solaranlage umfasst ferner mindestens ein wärmeleitendes Halteelement, welches lösbar an mindestens zwei der wärmeleitenden Hohlträger befestigt ist, um eine wärmeleitende Stützfläche zu bilden, welche über die wärmeleitenden Hohlträger thermisch mit den Kanälen gekoppelt ist. Die Solaranlage umfasst ferner mindestens ein Photovoltaikmodul auf dem mindestens einen wärmeleitenden Halteelement.

In bevorzugten Ausführungsformen umfasst die Solaranlage ferner Querträger, welche sich in einem von Null verschiedenen Winkel, insbesondere im Wesentlichen senkrecht, zu den wärmeleitenden Hohlträgern erstrecken, und welche auf einer der Stützfläche gegenüberliegenden Seite mit mindestens zwei der wärmeleitenden Hohlträger verbunden sind.

In bevorzugten Ausführungsformen erstrecken sich die Querträger im Wesentlichen über eine Breite des mindestens einen wärmeleitenden Halteelements oder ein Vielfaches der Breite des mindestens einen wärmeleitenden Halteelements, sodass das mindestens eine wärmeleitende Halteelement eine im Wesentlichen ebene Stützfläche für die Photovoltaikmodule bildet.

Der Fachmann erkennt, dass das Verfahren und die Solaranlage gemäß dem vorstehenden grundsätzlich ähnlich wie die vorhergehenden Aspekte aufgebaut sein können und dass daher die in diesem Zusammenhang beschriebenen bevorzugten Ausführungsformen auch auf diese Ausführungsformen anwendbar sein können. Die Halteelemente können dabei ähnlich den Deckelementen ausgeführt werden.

Auch ist es nicht zwingend notwendig, die Erfindung im Zusammenhang mit einer Gebäudehülle zu implementieren. Der Fachmann versteht vielmehr, dass entsprechende Solaranlagen auch auf Freiflächen aufgebaut werden können, und die zuvor beschriebenen Solaranlage gleichermaßen für eine solche Anwendung geeignet sein kann.

In einem dritten Aspekt bezieht sich die Erfindung auf ein PVT-System zur kombinierten Strom- und Wärmeerzeugung umfassend eine Mehrzahl parallel angeordneter wärmeleitender Hohlträger mit integrierten Kanälen für ein flüssiges Wärmeträgermedium, wobei die wärmeleitenden Hohlträger Fluidanschlüsse umfassen, um das Wärmeträgermedium an einem ersten Ende der wärmeleitender Hohlträger einzuleiten und an einem zweiten gegenüberliegenden Ende der wärmeleitenden Hohlträger abzuleiten; wobei die Mehrzahl parallel angeordneter wärmeleitender Hohlträger eine Stützebene zur Befestigung von Photovoltaikmodulen definiert; mindestens ein Photovoltaikmodul, welches parallel zu der Stützebene befestigt ist und thermisch mit der Mehrzahl parallel angeordneter wärmeleitender Hohlträger gekoppelt ist; und eine Graphitschicht, welche zwischen dem mindestens einen Photovoltaikmodul und der Mehrzahl parallel angeordneter wärmeleitender Hohlträger angeordnet ist, um Wärme von dem mindestens einen Photovoltaikmodul zu der Mehrzahl parallel angeordneter wärmeleitender Hohlträger zu leiten, wobei das mindestens eine Photovoltaikmodul einen metallischen Trägerkörper umfasst, wobei die Graphitschicht an dem metallischen Trägerkörper angebracht ist, sodass von den Photovoltaikmodulen erzeugte Wärme durch die Graphitschicht zu den wärmeleitenden Hohlträgern geleitet wird, wobei die Graphitschicht zwischen den wärmeleitenden Hohlträgern und dem metallischen Trägerkörper angeordnet ist.

Die Graphitschicht kann beispielsweise zwischen auf den wärmeleitenden Hohlträgern angebrachten Halteelementen (Deckelementen), welche ein Blechdach bilden können, und Photovoltaikmodulen angebracht sein, um eine thermische Kopplung zwischen den Photovoltaikmodulen und den Halteelementen zu erhöhen. Dies kann insbesondere bei der Verwendung von Glas-Glas-Modulen oder Glas-Folie-Modulen auf einem Blechdach vorteilhaft sein, oder kann eine Wärmeableitung zwischen einem Glas-Blech-Modul und einem wärmeleitenden Blechdach, bspw. aus Aluminium erhöhen. Die Graphitschicht kann flexibel sein und kann insbesondere als flexible Folie aufgebracht sein, beispielsweise aufgeklebt werden. Entsprechend können unterschiedliche thermische Ausdehnungen der Photovoltaikmodule und der wärmeleitenden Halteelemente zumindest teilweise durch die Flexibilität der Graphitschicht kompensiert werden. Klemmelemente, welche die Photovoltaikmodule gegen die wärmeleitenden Halteelemente oder die wärmeleitenden Hohlträger drücken, können einen thermischen Kontakt der verschiedenen Komponenten verbessern.

Der Fachmann versteht, dass die vorstehenden Elemente des ersten und zweiten Aspekts gleichermaßen im Rahmen des dritten Aspekts angewendet werden können. So umfasst die vorstehende Offenbarung auch ein Verfahren zum Bereitstellen des PVT-Systems gemäß dem dritten Aspekt als Teil einer Gebäudehülle.

### DETAILLIERTE BESCHREIBUNG DER ZEICHNUNGEN

Die Merkmale und Vorteile der Erfindung ergeben sich am besten aus den nachfolgend beschriebenen und anhand der Zeichnungen veranschaulichten bevorzugten Ausführungsformen, wobei:
- Fig. 1A: eine Draufsicht eines beispielhaften Dachaufbaus zeigt;
- Fig. 1B: eine Seitenansicht des beispielhaften Dachaufbaus aus Fig. 1A zeigt;
- Fig. 1C: einen Querschnitt durch einen beispielhaften wärmeleitenden Hohlträger zeigt;
- Fig. 2: ein Verfahren zum Herstellen eines Dachaufbaus anhand eines beispielhaften Flussdiagrams veranschaulicht;
- Fig. 3A, 3B: ein Beispiel einer Aufdachkonstruktion für eine Solaranlage zur kombinierten Strom- und Wärmeerzeugung zeigen;
- Fig. 4A-4E: einen Abschnitt einer beispielhaften Solaranlage für eine Aufdachanlage veranschaulichen;
- Fig. 5A, 5B: einen Abschnitt einer weiteren beispielhaften Solaranlage für eine Aufdachanlage veranschaulichen; und
- Fig. 6A-6D: verschiedene Beispiel von Solaranlagen mit einer flexiblen wärmeleitenden Schicht zwischen Photovoltaikmodulen und wärmeleitenden Hohlträgern veranschaulichen.

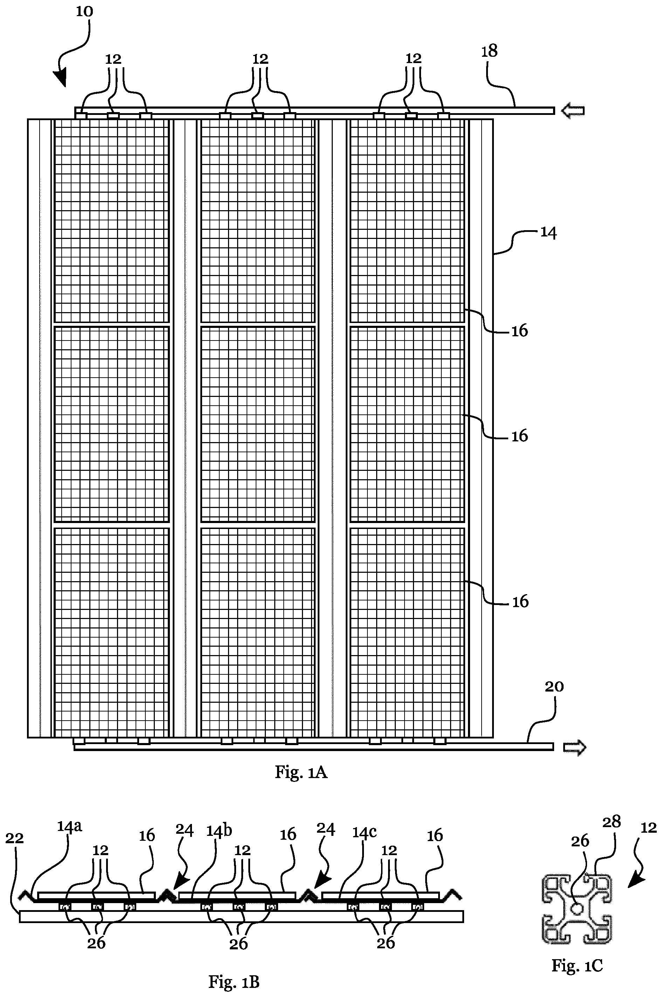

Fig. 1A zeigt eine Draufsicht auf einen beispielhaften Dachaufbau 10 für ein Schrägdach eines Gebäudes. Der Dachaufbau 10 umfasst eine Mehrzahl von metallischen Hohlträgern 12, welche sich parallel zueinander erstrecken und die äußerste Dachlattung des Dachaufbaus 10 bilden. Über den metallischen Hohlträgern 12 ist eine metallische Dachdeckung 14 angeordnet, welche die Mehrzahl von metallischen Hohlträgern 12 überlagert und ein konstruktive Ableitung von Regen entlang einer vertikalen Richtung erlaubt. Auf der metallischen Dachdeckung 14 sind Photovoltaikmodule 16 befestigt, welche thermisch mit der metallischen Dachdeckung 14 gekoppelt sind.

Die metallischen Hohlträger 12 können jeweils integrierte Kanäle 26 umfassen (nicht gezeigt in Fig. 1A, aber gezeigt in Fig. 1B, 1C), welche sich entlang der (vertikalen) Längsrichtung der metallischen Hohlträger 12 erstrecken und ein Wärmeträgermedium führen können. Jeder der metallischen Hohlträgern 12 kann mit einer Einflussleitung 18 und einer Abflussleitung 20 gekoppelt sein, wobei schematische Pfeile eine Flussrichtung eines Wärmeträgermediums, wie Wasser, anzeigen. Die Einflussleitung 18 und die Abflussleitung 20 können sich senkrecht zu den metallischen Hohlträgern 12 erstrecken und können mit den metallischen Hohlträgern 12 an den jeweiligen gegenüberliegen longitudinalen Enden der metallischen Hohlträger 12 gekoppelt sein, sodass das Wärmeträgermedium von der Einflussleitung 18 durch die integrierten Kanäle 26 der metallischen Hohlträger 12 in die Abflussleitung 20 geführt werden kann.

Ein Wärmeträgerfluss über die Einflussleitung 18 durch die metallischen Hohlträger 12 und in die Abflussleitung 20 kann Wärme der metallischen Hohlträgern 12 abführen, um die damit verbundene metallische Dachdeckung 14 und die darauf befestigten Photovoltaikmodule 16 zu kühlen und um ein erwärmtes Wärmeträgermedium für eine Verwendung in dem Gebäude bereitstellen.

Fig. 1B zeigt einen beispielhaften Querschnitt des Dachaufbaus 10 aus Fig. 1A senkrecht zu einer Längsrichtung der metallischen Hohlträger 12, während Fig. 1C einen Querschnitt durch einen beispielhaften metallischen Hohlträger 12 zeigt.

Gemäß der Darstellung in Fig. 1B sind die metallischen Hohlträger 12 auf einer unteren Dachlattung 22 befestigt, welche senkrecht zu der Längsrichtung der metallischen Hohlträger 12 verläuft. Die untere Dachlattung 22 kann aus Holz gefertigt sein und die metallischen Hohlträger 12 können über geeignete Befestigungsmittel, wie Schrauben oder Nägel, auf diesen befestigt werden. Die untere Dachlattung 22 kann auf einer Sparrenlage des Gebäudes montiert sein und mit den metallischen Hohlträgern 12 eine Unterkonstruktion des Dachaufbaus 10 mit senkrecht zueinander verlaufenden Latten bilden.

Auf den metallischen Hohlträgern 12 sind mehrere metallische Deckelemente 14a-c befestigt, wobei die metallischen Deckelemente 14a-c jeweils mehrere der metallischen Hohlträger 12 überlagern und mit diesen verbunden sind, um einen physischen und thermischen Kontakt zwischen den metallischen Deckelementen 14a-c und den jeweiligen metallischen Hohlträger 12 herzustellen.

Benachbarte metallische Deckelementen 14a-c überlappen in einem Verbindungsabschnitt 24, um eine konstruktive Abdichtung gegenüber Regen bereitzustellen. In dem Verbindungsabschnitt 24 können die metallische Deckelementen 14a-c miteinander verbunden werden, bspw. über Falzungen, Löten oder lösbare Befestigungsmittel, um eine zusammenhängende metallische Dachdeckung 14 zu bilden.

Wie in Fig. 1B gezeigt, umfasst vorzugsweise jeder der metallischen Hohlträger 12 einen integrierten Kanal 26, welcher sich entlang der Längsrichtung des jeweiligen metallischen Hohlträgers 12 erstreckt, um das Wärmeträgermedium entlang der metallischen Hohlträger 12 zu führen. Zum Beispiel können die metallischen Hohlträger 12 stranggepresste Metallträger sein, welche interne durchgehende Hohlräume aufweisen, um Rohre für das Wärmeträgermedium zu bilden.

Vorzugsweise weisen die metallischen Hohlträger 12 jeweils Befestigungsflächen 28 auf, welche im Wesentlichen eben sind, um eine flache Kontaktfläche für die metallische Deckelementen 14a-c bereitzustellen, über welche eine thermische Kopplung zwischen der Dachdeckung und den metallischen Hohlträgern 12 erfolgen kann. An den Befestigungsflächen 28 können Bohrungen vorgesehen sein, um die Deckelemente 14a-c mittels lösbarer Befestigungsmittel in Kontakt mit den metallischen Hohlträgern 12 zu halten.

Entsprechend kann ein Dachaufbau 10 bereitgestellt werden, wobei die der Dachdeckung zugeneigte Lattung durch ein Metallprofil ersetzt wird, das eine im Vergleich zu den üblichen Holzlattungen gute Wärmeleitung hat und im Inneren ein Hohlprofil aufweist, das von dem Wärmeträgermedium zur Kühlung durchfloßen werden kann. Durch diese Konstruktion ist es möglich, ein komplettes Dach als Kühldach auszubauen und dabei nur mit einem herkömmlichen Blechdach zu belegen. Auf diesem Blechdach können Photovoltaikmodule 16 sowohl aufgeklebt sein als auch nachträglich auf dem Blechdach befestigt werden.

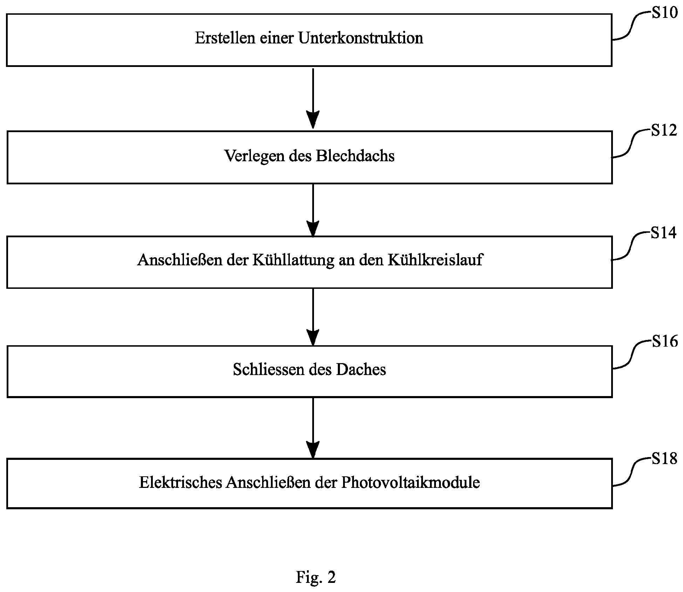

Fig. 2 zeigt ein beispielhaftes Ablaufdiagramm für ein Verfahren zur Herstellung eines entsprechenden Dachaufbaus 10. Das Verfahren umfasst das Erstellen einer Unterkonstruktion (S10), welche das Befestigen einer unteren Dachlattung 22 und der metallischen Hohlträger 12 über einer Sparrenlage einer Dachkonstruktion umfassen kann. Das Verfahren umfasst ferner das Verlegen eines Blechdachs (S12) über der Unterkonstruktion, wobei mindestens ein metallisches Deckelement 14a-c an den metallischen Hohlträgern 12 befestigt werden kann, sodass eine resultierende metallische Dachdeckung 14 thermisch mit Kanälen 26 durch die metallischen Hohlträgern 12 gekoppelt wird. Beide Schritte können von einem Dachdecker durchgeführt werden, sodass die Herstellung des Kühldachs in gewohnte Arbeitsabläufe integriert werden kann, wobei Anfangs- und Endpunkte einer durch die metallischen Hohlträgern 12 gebildeten Kühllattung offenbleiben können.

Das Verfahren umfasst ferner das Anschließen der Kühllattung an einen Kühlkreislauf (S14), indem bspw. Fluidanschlüsse im Bereich der längsseitigen Enden der metallischen Hohlträgern 12 mit einem gebäudeinternen Kühlkreislauf verbunden werden. Vorzugsweise erfolgt das Anschließen der Kühllattung im Bereich der seitlichen Enden des Blechdachs, d.h. im Bereich des Firsts, der Traufe oder des Ortgangs, um eine Wartung des Fluidkreislaufs zu vereinfachen.

Das Verfahren umfasst ferner das Schließen des Dachs (S16), bspw. durch Befestigen eines Firstblechs über den Fluidanschlüssen der metallischen Hohlträger 12. In einigen Ausführungsformen kann das Dach jedoch bereits vor dem Anschließen der Kühllattung an den Kühlkreislauf geschlossen werden, bspw. wenn die metallischen Hohlträger 12 bereits untereinander verbunden sind und/oder wenn Fluidanschlüsse im Bereich des Ortgangs des Dachaufbaus 10 auch nach dem Schließen des Dachs freiliegen.

Auf dem mindestens einen metallischen Deckelement 14a-c, welches das Blechdach bildet, können bereits Photovoltaikmodule 16 vormontiert, bspw. aufgeklebt, sein, sodass die Photovoltaikmodule 16 mit dem Blechdach verlegt werden können. Andernfalls kann das Verfahren das Verlegen der Photovoltaikmodule 16 wärmeleitend und vorzugsweise formschlüssig auf das Blechdach umfassen.

Das Verfahren umfasst ferner das elektrische Anschließen der Photovoltaikmodule 16 (S18) an einen gebäudeinternen Stromkreislauf, um die Herstellung des gebäudeintegrierten Photovoltaik- und Photothermiesystems abzuschließen. Das Anschließen der Photovoltaikmodule 16 bzw. das Verlegen der Photovoltaikmodule 16 kann von den anderen Schritten getrennt durch einen Elektriker erfolgen.

Zwar ist in dem beispielhaft gezeigten Verfahren das Anschließen der Photovoltaikmodule 16 als letzter Schritt im Rahmen eines im Wesentlichen konventionellen Arbeitsablaufs zur Herstellung eines Dachaufbaus 10 gezeigt, der Fachmann erkennt jedoch, dass das Anschließen der Photovoltaikmodule 16 auch vor dem Schließen des Dachs und vor dem Anschließen der Kühllattung an den Kühlkreislauf durchgeführt werden kann.

Das Verfahren kann grundsätzlich mit Standardtechniken der beteiligten Gewerke, d.h. Dachdecker, Heizungsbauer und Elektriker, durchgeführt werden, wobei diese im Wesentlichen voneinander getrennte Arbeitsabläufe haben. Ferner kann das Verfahren wenige spezielle Teile benötigen, da bspw. die metallischen Hohlträger 12 durch Standardprofile wie stranggepresste Aluminiumhohlträger bereitgestellt werden können, welche anschließend bspw. mit einem herkömmlichen Aluminiumblechdach belegt werden können.

Die Erfindung wurde vorstehend anhand eines Beispiels eines Schrägdaches veranschaulicht, welches die Neigung des Daches zu optimalen Kollektion von Sonnenenergie nutzt. Der Fachmann erkennt jedoch, dass grundsätzlich jede Dachform, wie ein Flachdach, von dem erfindungsgemäßen Dachaufbau profitieren kann.

Ferner kann die Konstruktion des Dachaufbaus 10 auch zur Verkleidung von Fassaden eines Gebäudes genutzt werden, wobei die metallischen Hohlträger 12 und das mindestens eine metallische Deckelement 14a-c eine metallische Fassadenbekleidung zur Montage und Kühlung von Photovoltaikmodulen 16 auf einer seitlichen Wand eines Gebäudes bilden können. Entsprechend kann durch die Nutzung der Wandfläche die Fläche des gebäudeintegrierten PVT-Systems über die Fläche des Dachs hinaus erhöht werden.

Zusätzlich kann das zuvor gezeigte System auch zum Nachrüsten eines bestehenden konventionellen Dach- oder Wandaufbaus mit einer Solaranlage zur kombinierten Strom- und Wärmeerzeugung genutzt werden, indem die Hohlträger unter Verwendung von Dach- oder Wandhaken über einer bestehenden Gebäudehülle befestigt werden.

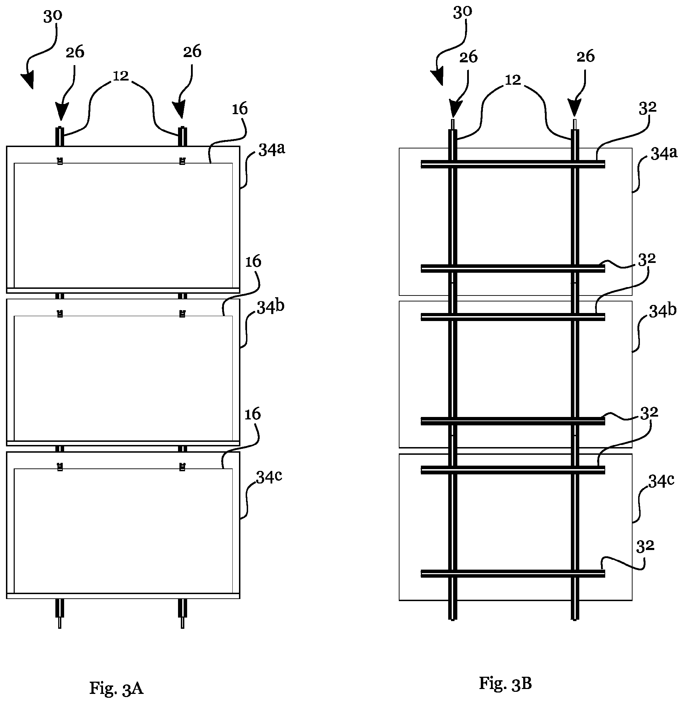

Fig. 3A, 3B zeigt ein Beispiel einer Aufdachkonstruktion für eine Solaranlage 30 zur kombinierten Strom- und Wärmeerzeugung, wobei Fig. 3A und 3B jeweils Front- und Rückansichten darstellen.

Die Aufdachkonstruktion der Solaranlage 30 umfasst zwei parallele wärmeleitende Hohlträger 12, welche über eine Mehrzahl von Querträgern 32 miteinander verbunden sind. An den wärmeleitenden Hohlträgern 12 sind Blechscharen 34, 34a-c als wärmeleitende Halteelemente 34, 34a-c lösbar befestigt, welche jeweils ein Photovoltaikmodul 16 tragen.

Jeder Blechschare 34, 34a-c bzw. jedem Photovoltaikmodul 16 sind zwei Querträger 32 zugeordnet, welche sich senkrecht zu den wärmeleitenden Hohlträgern 12 erstrecken und mit den wärmeleitenden Hohlträgern 12 ein im Wesentlichen rechteckiges Stützgerüst bilden, dessen Umfang unterhalb der jeweiligen Blechschare 34, 34a-c und/oder des jeweiligen Photovoltaikmoduls 16 verläuft. Das rechteckige Stützgerüst kann eine im Wesentlichen ebene Befestigungsebene definieren, um eine möglichst ebene Kontaktfläche zwischen den Blechscharen 34, 34a-c und den daran angebrachten Photovoltaikmodulen 16 sicherzustellen.

Die Querträger 32 können an Dachhaken (nicht gezeigt) befestigt werden, um die Aufdachkonstruktion auf einem bestehendem Dachaufbau zu befestigen und die wärmeleitenden Hohlträger 12 können anschließend über den Querträgern 32 verlegt werden und an diesen befestigt werden, um eine Trägerkonstruktion mit integrierten Kanälen 26 für ein Wärmeträgermedium zu bilden. Auf der Trägerkonstruktion können Blechscharen 34, 34a-c befestigt werden, welche eine thermische Kopplung zwischen den integrierten Kanälen 26 und an den Blechscharen 34, 34a-c befestigten Photovoltaikmodulen 16 bereitstellen können. Die Befestigung umfasst vorzugsweise eine kraft- und/oder formschlüssige Verbindung zwischen den Blechscharen 34, 34a-c und den wärmeleitenden Hohlträgern 12, wie durch Schrauben, Nieten, Klemmelemente, Falzungen, formschlüssige Halterungen oder Kombinationen davon.

Die Photovoltaikmodule 16 können an der auf diese Weise montierten Kühlkonstruktion aus wärmeleitenden Hohlträgern 12 und Blechscharen 34, 34a-c befestigt werden, oder bereits vor der Montage der Solaranlage 30 an den Blechscharen 34, 34a-c angebracht und mit diesen an den wärmeleitenden Hohlträgern 12 befestigt werden.

Wie in den vorherigen Beispielen können die Kanäle 26 der wärmeleitenden Hohlträger 12 im Wesentlichen unabhängig von anderen Komponenten der Solaranlage 30 mit einem Fluidkreislauf verbunden werden, was zum einen eine verbesserte Aufgabentrennung zwischen den Gewerken bei der Montage der Solaranlage 30 erlaubt und gleichzeitig eine Wartung der Photovoltaikmodule 16 vereinfachen kann. Insbesondere können defekte Photovoltaikmodule 16 isoliert ausgetauscht werden, ohne eine Verbindung der integrierten Kanäle 26 mit Einfluss- 18 oder Abflussleitungen 20 zu trennen.

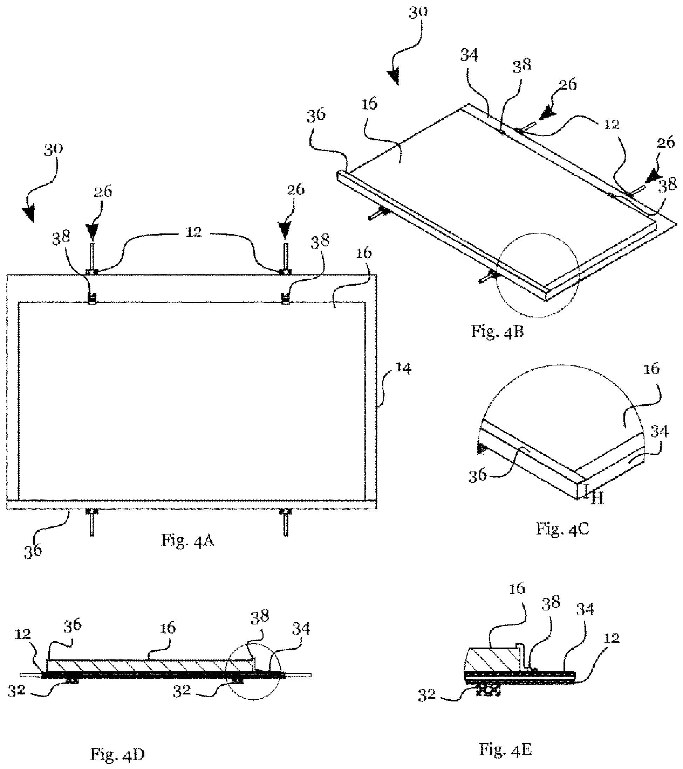

Fig. 4A-4E veranschaulichen einen Abschnitt einer beispielhaften Solaranlage 30 für eine Aufdachanlage, wobei Fig. 4A eine Fronansicht zeigt und Fig. 4B, 4C und 4D, 4E jeweils perspektivische Ansichten und Querschnitte darstellen. Fig. 4C, 4E betreffen vergrößerte Ansichten der in Fig. 4B, 4D kreisförmig gekennzeichneten Abschnitte.

Der Abschnitt der Solaranlage 30 umfasst zwei wärmeleitende Hohlträger 12, welche sich parallel zueinander erstrecken und über Querträger 32 miteinander verbunden sein können. An den zwei wärmeleitenden Hohlträgern 12 ist eine Blechschare 34, 34a-c lösbar befestigt, und bildet eine wärmeleitende Befestigungsfläche für ein Photovoltaikmodul 16, welche das Photovoltaikmodul 16 stützen kann und Wärme von dem Photovoltaikmodul 16 über eine entsprechende rückseitige Stützfläche ableiten können.

In Fig. 4A-4E ist das Photovoltaikmodul 16 in einer u-förmige Aufnahme 36 angeordnet, welche eine seitliche Nut im Randbereich der Blechschare 34, 34a-c ausbildet und das Photovoltaikmodul formschlüssig aufnimmt. Die u-förmige Aufnahme 36 kann durch Umformen der Blechschare 34, 34a-c erhalten werden und kann eine Höhe H aufweisen, die im Wesentlichen der Höhe des Photovoltaikmoduls 16 entspricht. Die Höhe H der u-förmigen Aufnahme 36 kann jedoch auch größer als eine Höhe der der Blechschare 34, 34a-c sein, und die Blechschare 34, 34a-c kann durch das Auffüllen der u-förmige Aufnahme 36 in der Höhenrichtung mit zusätzliche Komponenten (nicht dargestellt), wie einer Dichtung, kraftschlüssig in der u-förmigen Aufnahme 36 gehalten werden.

An der Seite des Photovoltaikmoduls 16, welche der u-förmige Aufnahme 36 gegenüberliegt, kann ein Klemmelement 38, wie der in Fig. 4E vergrößert dargestellte Klemmwinkel 38, an der Blechschare 34, 34a-c mit lösbaren Befestigungselementen angebracht sein, wobei das Klemmelement 38 das Photovoltaikmodul 16 kraft- und/oder formschlüssig an der Blechschare 34, 34a-c befestigt. Entsprechend kann das Photovoltaikmodul 16 leicht durch Lösen des Klemmelements 38 ausgetauscht werden. Ferner können auch grundsätzlich nicht auf Photothermieanwendungen angepasste Photovoltaikmodule 16, wie Glas-Glas Photovoltaikmodule, auf einfache Weise an der Blechschare 34, 34a-c befestigt werden.

In Fig. 4A-4E ist die Blechschare 34, 34a-c als durchgehend flächiges Element dargestellt, was einen Wärmetransfer von dem Photovoltaikmodul 16 auf das Wärmeträgermedium in den Kanälen 26 der wärmeleitenden Hohlträger 12 begünstigen kann. Der Fachmann versteht jedoch, dass die die Blechschare 34, 34a-c auch Aussparungen zur Durchführung von Kabeln oder zur Gewichtsreduktion aufweisen kann. Fernern kann die Blechschare 34, 34a-c auch eine Mehrzahl von Durchbohrungen aufweisen, um die Klemmelemente 38 an verschiedenen Positionen anzubringen, sodass Photovoltaikmodule 16 unterschiedlicher Breite aufgenommen werden können. Entsprechend kann die Blechschare 34, 34a-c in einigen Ausführungsformen nur ein im Wesentlichen flächiges Element sein, welches eine Mehrzahl von Aussparungen aufweisen kann und welches mindestens die Hälfte der Rückseite des Photovoltaikmoduls 16 überlappt. Ferner kann das Photovoltaikmodul 16 auch ohne eine u-förmige Aufnehme 36, bspw. beidseitig durch Klemmelemente 38, befestigt werden.

Obwohl in Fig. 4A-4E nur ein Photovoltaikmodul 16 an der Blechschare 34, 34a-c befestigt ist, kann auch eine Mehrzahl von Photovoltaikmodulen 16 an einer Blechschare 34, 34a-c befestigt sein. Auch kann die Blechschare 34, 34a-c an mehr als zwei wärmeleitenden Hohlträgern 12 befestigt sein, bspw. um einen Wärmeabtransfer von den Photovoltaikmodulen 16 zu erhöhen.

Ferner sind in Fig. 4A-4E zwar nur eine Blechschare 34, 34a-c und ein Photovoltaikmodul 16 exemplarisch dargestellt, der Fachmann versteht jedoch, dass eine Mehrzahl von Blechscharen 34, 34a-c und Photovoltaikmodulen 16 an den wärmeleitenden Hohlträgern 12 befestigt werden können, um eine Solaranlage 30 zu bilden, wie exemplarisch in Fig.3A, 3B gezeigt.

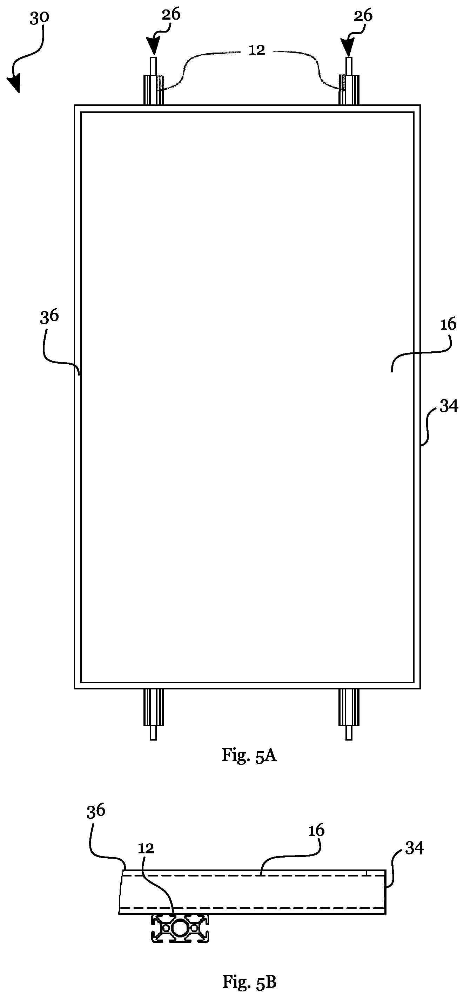

Fig. 5A, 5B veranschaulichen einen Abschnitt einer weiteren beispielhaften Solaranlage 30 für eine Aufdachanlage, wobei Fig. 5A, und 5B jeweils eine Frontansicht und einen vergrößerten seitlichen Querschnitt entlang der wärmeleitenden Hohlträger 12 darstellen.

Im Gegensatz zu der Solaranlage 30 inFig. 4A-4E ist das Photovoltaikmodul 16 mit der Blechschare 34, 34a-c integriert. Insbesondere ist das Photovoltaikmodul 16 umlaufend in einen wärmeleitenden Trägerrahmen 34 eingepasst, welcher das Photovoltaikmodul 16 über eine umlaufende Nut 36 trägt. Der wärmeleitende Trägerrahmen 34 kann nach der Befestigung der wärmeleitenden Hohlträger 12 an einem bestehenden konventionellen Dachaufbau an den wärmeleitenden Hohlträgern 12 befestigt werden, um eine Solaranlage 30 zu bilden, welche über die Kanäle der Stützkonstruktion auch thermische Energie nutzen kann. Dabei kann der wärmeleitende Trägerrahmen 34 Wärme der Photovoltaikmodule 12 über eine rückseitige Stützfläche zu den Hohlträgern 12 abführen.

Der wärmeleitenden Trägerrahmen 34 mit der umlaufenden Nut 36 kann die Montage der Photovoltaikmodule erleichtern und kann wärmeleitende Materialabschnitte zwischen dem Trägerrahmen 34 und dem Photovoltaikmodul 16 vor Witterungseinflüssen schützen, wie bei Verwendung eines Folie-Glas Photovoltaikmoduls und/oder einer Wärmeleitpaste, da die umlaufende Nut 36 eine Rückseite des Photovoltaikmoduls 16 zumindest teilweise abdichten kann.

Somit kann das Prinzip der Kühlung einer Solaranlage 30 durch das Nutzen integrierter Kanäle 26 in stützenden Hohlträgern 12 auch dann angewendet werden, wenn ein bestehender Dachaufbau nachgerüstet werden soll. Dabei können ebenfalls die Vorteile einer sich ergebenden Aufgabentrennung bei der Herstellung und Wartung der Solaranlage 30 erreicht werden, die vorstehend in Zusammenhang mit dem Dachaufbau 10 zur kombinierten Strom- und Wärmeerzeugung besprochen wurden. Wie in diesen Beispielen können Fluidanschlüsse an die Kanäle 26 der wärmeleitenden Hohlträger 12 nur in Randbereichen der Solaranlage 30 notwendig sein, was eine Wartung und Montage der Solaranlage 30 vereinfachen kann. Auch kann eine solche Solaranlage 30 vorteilhaft auf Flachdächern angewandt werden, da eine räumliche Anordnung der Hohlträger 12 auf einen optimalen Sonneneinstrahlwinkel abgestimmt werden kann.

Die Freiräume, die hinter den Blechscharen/Trägerrahmen 34, 34a-c zwischen den wärmeleitenden Hohlträgern 12 gebildet werden, können vorteilhaft zur Montage von Kabelboxen für die Photovoltaikmodule genutzt werden, sodass ein kompaktes und modulares Gesamtsystem erhalten werden kann.

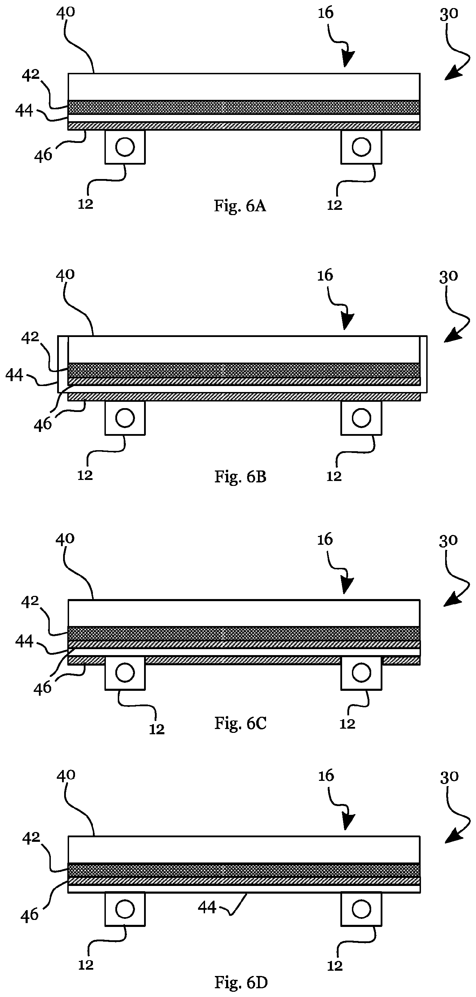

Fig. 6A-6D veranschaulichen weitere Beispiele von Solaranlagen 30, wobei ein Photovoltaikmodul 16 thermisch mit wärmeleitenden Hohlträgern 12 gekoppelt ist.

In Fig. 6A umfasst das Photovoltaikmodul 16 eine schützende Glasabdeckung 40, eine aktive Schicht 42, welche einfallende Strahlung in nutzbare elektrische Energie umwandelt, eine metallische Trägerschicht 44, welche die Glasabdeckung 40 und die aktive Schicht 42 strukturell stützt, und eine flexible wärmeleitende Schicht 46, welche rückseitig an der metallischen Trägerschicht 44 angeordnet ist.

Die flexible wärmeleitende Schicht 46 ist vorzugsweise eine flexible Folie mit einer Wärmeleitfähigkeit von mehr als 20 W/(m*K) auf, insbesondere mehr als 50 W/(m*K), wie eine Graphitfolie mit einer Wärmeleitfähigkeit von typischerweise mehr als 100 W/(m*K), welche eine Wärmeleitung in der Stützebene, in welcher die metallische Trägerschicht 44 die aktive Schicht 42 und die Glasabdeckung 40 stützt, erhöhen kann. Beispielsweise kann die metallische Trägerschicht 44 aus Edelstahl gefertigt sein, sodass die flexible wärmeleitende Schicht 46 eine höhere thermische Leitfähigkeit als die metallische Trägerschicht 44 aufweisen kann.

Graphit kann als flexible wärmeleitende Schicht vergleichsweise kostengünstig mit ausreichender Schichtdicke rückseitig auf der metallischen Trägerschicht 44 aufgetragen werden, sodass eine ausreichende Wärmeableitung zu den wärmeleitenden Hohlträgern 12 erzielt werden kann. Beispielsweise kann eine Graphitfolie 46 mit einer Dicke von ca. 2 mm rückseitig auf dem Photovoltaikmodul 16 aufgebracht sein. Die Graphitfolie kann durch ihre Flexibilität zudem mechanische Spannungen aufgrund unterschiedlicher thermischer Ausdehnungskoeffizienten ausgleichen.

Die flexible wärmeleitende Schicht 46 liegt in der Darstellung direkt an den wärmeleitenden Hohlträgern 12, um Wärme von der darüberliegenden Konstruktion in der Stützebene zu den wärmeleitenden Hohlträgern 12 zu leiten. Beispielsweise kann die flexible wärmeleitende Schicht 46 rückseitig auf ein Blechdach aufgeklebt werden, welches Photovoltaikmodule 16 trägt.

In Fig. 6B ist ein weiteres Beispiel einer Solaranlage 30 gezeigt, in welchem zusätzlich eine zweite flexible wärmeleitende Schicht 46, wie eine zweite Graphitschicht, zwischen der metallischen Trägerschicht 44 und der aktiven Schicht 42 angeordnet ist. Entsprechend kann eine Ableitung von Wärme aus der Glasabdeckung 40 und der aktiven Schicht 42 begünstigt werden. In dem dargestellten Beispiel ist ferner die metallische Trägerschicht 44 in der Form eines Trägerrahmens ausgebildet, welcher die Glasabdeckung 40 und die aktive Schicht 42 seitlich einfasst. Die zweite flexible wärmeleitende Schicht 46 kann also eine Schicht innerhalb eines integrierten Glas-Blech-Moduls sein, welches als kombiniertes Deckelement 14a-c und Photovoltaikmodul 16 zur Deckung eines Dachs verwendet werden kann.

Fig. 6C veranschaulicht ein weiteres Beispiel, in welchem eine zweite flexible wärmeleitende Schicht 46, wie eine zweite Graphitschicht, zwischen der metallischen Trägerschicht 44 und der aktiven Schicht 42 angeordnet ist. Ferner ist die andere rückseitig angeordnete flexible wärmeleitende Schicht 46 nicht durchgehend über die metallische Trägerschicht 44 verteilt, sondern bedeckt die metallische Trägerschicht 44 nur teilweise zwischen den wärmeleitenden Hohlträgern 12. Beispielsweise kann eine Graphitfolie zwischen vorgesehenen Befestigungsabschnitten für die wärmeleitenden Hohlträger 12 aufgeklebt werden.

Als weiteres Beispiel können auch andere Abschnitte, beispielsweise zur Montage von Kabelboxen auf der Rückseite der metallischen Trägerschichten 44, durch ausgesparte Bereiche der flexiblen wärmeleitenden Schicht 46 freiliegen. Die flexible wärmeleitende Schicht 46 kann also nur im Wesentlichen eine dem Photovoltaikmodul 16 gegenüberliegende Fläche bedecken, beispielsweise 50% oder 75% und mehr der dem Photovoltaikmodul 16 gegenüberliegenden Fläche der metallischen Trägerschicht 44. In einer Projektion senkrecht zur Stützfläche kann die flexible wärmeleitende Schicht 46 trotzdem die Photovoltaikmodule 16 im Wesentlichen überdecken, um eine Wärmeableitung zu den wärmeleitenden Hohlträgern 12 in der Stützebene zu unterstützen.

Fig. 6D veranschaulicht ein Beispiel, in welcher eine flexible wärmeleitende Schicht 46 umfassend Graphit, zwischen einer metallischen Trägerschicht 44 und einem Photovoltaikmodul 16 angeordnet ist. Die metallische Trägerschicht **44** kann aus Aluminium oder Titanzink gebildet sein und kann ein wärmeleitendendes Halteelement ähnlich zu den zuvor beschriebenen Deckelementen 14a-c bilden.

Die flexible wärmeleitende Schicht 46 kann Wärme aus dem Photovoltaikmodul 16 zu dem wärmeleitenden Halteelement ableiten, um eine Kühlung des Photovoltaikmoduls 16 zu verbessern. Beispielsweise kann das Photovoltaikmodul 16 ein Glas-Glas Modul sein, welches thermisch über die flexible wärmeleitende Schicht 46 an die metallische Trägerschicht 44/das wärmeleitende Halteelement und damit an die wärmeleitenden Hohlträger 12 gekoppelt wird.

Ein Vorteil dieser Ausführungsform kann sein, dass die Flexibilität einer Graphitschicht unterschiedliche Wärmeausdehnungen von Glas und Aluminium kompensieren kann. Beispielsweise ist der Wärmeausdehnungskoeffizient von Glas etwa 8,5 · 10⁻⁶*K*⁻¹, und der Wärmeausdehnungskoeffizient von Aluminium etwa 23 · 10⁻⁶*K*⁻¹. Die Flexibilität der Graphitschicht zwischen diesen sich unterschiedlich stark ausdehnenden Materialien kann eine relative Längenausdehnung eines wärmeleitendenden Halteelements aus Aluminium zumindest teilweise kompensieren, sodass auch bei größeren thermischen Gradienten, wie sie im Rahmen von aktiv gekühlten wärmeleitenden Hohlträgern 12 in der Solaranlage 30 auftreten können, eine ausreichende Wärmeleitfähigkeit durch die Graphitschicht aufrecht gehalten werden kann.

Der Fachmann versteht natürlich, dass die vorstehenden Darstellungen in Fig. 6A-D nur schematisch sind und dass zusätzliche Schichten zwischen den dargestellten Schichten vorhanden sein können. Beispielsweise kann das Photovoltaikmodul eine rückseitige Abdeckung aus Kunststoff, Glas oder Folie aufweisen, und zusätzliche transparente Folien und/oder elektrische Verbindungsschichten können zwischen der Glasabdeckung 40 und der aktiven Schicht 42 und/oder zwischen der aktiven Schicht 42 und den darunterliegenden Schichten vorgehsehen sein.

Obwohl Graphit aufgrund seiner thermischen Eigenschaften eine bevorzugte Ausführungsform darstellt, können auch andere flexible wärmeleitende Schichten 46, welche beispielsweise in Form einer wärmeleitenden Folie oder Paste aufgetragen werden können, in Ausführungsformen verwendet werden. Alternativ kann eine Graphitschicht auch ohne eine metallische Trägerschicht 44 anstelle eines wärmeleitenden Halteelements (wie die Deckelemente 14a-c) verwendet werden.

Die vorstehende Beschreibung und die Zeichnungen sollen lediglich die Erfindung und deren Vorteile veranschaulichen und nicht einschränkend verstanden werden. Vielmehr soll der Schutzbereich anhand der nachstehenden Ansprüche bestimmt werden.

### BEZUGSZEICHENLISTE

- 10: Dachaufbau
- 12: metallische Hohlträger
- 14: metallische Dachdeckung
- 14a-c: metallische Deckelemente
- 16: Photovoltaikmodule
- 18: Einflussleitung
- 20: Abflussleitung
- 22: untere Dachlattung
- 24: Verbindungsabschnitt
- 26: Kanäle
- 28: Befestigungsflächen
- 30: Solaranlage
- 32: Querträger
- 34, 34a-c: Blechschare
- 36: Nut
- 38: Klemmelement
- 40: Glasabdeckung
- 42: aktive Schicht
- 44: metallische Trägerschicht
- 46: flexible wärmeleitende Schicht

## Patentansprüche

1. Verfahren zum Bereitstellen einer Solaranlage, insbesondere eines Dachaufbaus (10) oder eines Wandaufbaus, zur kombinierten Strom- und Wärmeerzeugung, das Verfahren umfassend:
Befestigen einer Unterkonstruktion auf einer tragenden Stützkonstruktion, wobei die Unterkonstruktion eine Mehrzahl parallel angeordneter wärmeleitender Hohlträger (12) mit integrierten Kanälen (26) für ein flüssiges Wärmeträgermedium umfasst, und wobei die wärmeleitenden Hohlträger (12) Fluidanschlüsse umfassen, um das Wärmeträgermedium an einem ersten Ende der wärmeleitender Hohlträger (12) einzuleiten und an einem zweiten gegenüberliegenden Ende der wärmeleitenden Hohlträger (12) abzuleiten, wobei die wärmeleitenden Hohlträger (12) als tragende Elemente entsprechend einer Dachlattung bzw. äußeren Lattung verlegt werden;
Befestigen mindestens eines wärmeleitenden Halteelements (14, 14a-c) an den stützenden wärmeleitenden Hohlträgern (12) der Unterkonstruktion, um eine wärmeleitende Stützfläche für Photovoltaikmodule (16) zu bilden, welche über die wärmeleitenden Hohlträger (12) thermisch mit den Kanälen (26) gekoppelt ist; und
Anbringen von den Photovoltaikmodulen (16) auf dem mindestens einen wärmeleitenden Halteelement (14, 14a-c);
wobei mindestens ein lösbar angebrachtes Klemmelement (38) die Photovoltaikmodule (16) kraft- und/oder formschlüssig an dem mindestens einen wärmeleitenden Halteelement (14, 14a-c) befestigt; und/oder
wobei das mindestens eine wärmeleitende Halteelement (14, 14a-c) eine flexible wärmeleitende Schicht (46) und einen metallischen Trägerkörper (44) zum Tragen der Photovoltaikmodule (16) umfasst, wobei die wärmeleitende Schicht (46) an dem metallischen Trägerkörper (44) angebracht ist, sodass von den Photovoltaikmodulen (16) erzeugte Wärme durch die wärmeleitende Schicht (46) zu den wärmeleitenden Hohlträgern (12) geleitet wird, wobei die wärmeleitende Schicht (46) zwischen den wärmeleitenden Hohlträgern (12) und dem metallischen Trägerkörper (44) angeordnet ist.

2. Verfahren gemäß Anspruch 1, wobei die tragende Stützkonstruktion eine tragende Dachkonstruktion ist,
wobei die wärmeleitenden Hohlträger (12) die äußerste Dachlattung der Unterkonstruktion eines Dachaufbaus (10) bilden, und wobei das Befestigen der mindestens eines wärmeleitenden Halteelements (14, 14a-c) auf der Unterkonstruktion eine Dachdeckung bildet, wobei die Dachkonstruktion optional ein Schrägdach definiert und die Mehrzahl parallel angeordneter wärmeleitender Hohlträger (12) senkrecht oder parallel zur Firstlinie desselben befestigt werden; und/oder
wobei die tragende Stützkonstruktion eine tragende Wandkonstruktion ist,
wobei die wärmeleitenden Hohlträger (12) die äußerste Lattung der Unterkonstruktion bilden, und wobei das Befestigen des mindestens einen wärmeleitenden Halteelements (14, 14a-c) auf der Unterkonstruktion eine Fassadenbekleidung bildet.

3. Verfahren gemäß einem der vorhergehenden Ansprüche, wobei das mindestens eine wärmeleitende Halteelement (14, 14a-c) vorzugsweise eine Wärmeleitfähigkeit von mehr als 50 W/(m*K) aufweist, insbesondere mehr als 100 W/(m*K), bevorzugt mehr als 150 W/(m*K); und/oder
wobei die wärmeleitende Schicht (46) eine Wärmeleitfähigkeit von mehr als 20 W/(m*K) aufweist, insbesondere mehr als 50 W/(m*K), bevorzugt mehr als 80 W/(m*K), wobei die wärmeleitende Schicht (46) insbesondere eine Dicke zwischen 0,5 mm und 5 mm, zwischen 1 und 4 mm, oder ungefähr 2 mm, aufweist; und/oder
wobei eine Wärmeleitfähigkeit der wärmeleitenden Schicht (46) größer ist als eine Wärmeleitfähigkeit des metallischen Trägerkörpers (44)
wobei die wärmeleitende Schicht (46) eine flexible Folie ist; und/oder
wobei die wärmeleitende Schicht (46) Graphit umfasst, oder vorwiegend aus Graphit besteht.

4. Verfahren gemäß einem der vorhergehenden Ansprüche, wobei eine zweite wärmeleitende Schicht (46) zwischen dem metallischen Trägerkörper (44) und einer aktiven Schicht (42) der Photovoltaikmodule (16) angeordnet ist.

5. Verfahren gemäß einem der vorhergehenden Ansprüche, wobei das Verfahren ferner umfasst:
Anschließen eines Fluidkreislaufs an die Fluidanschlüsse der wärmeleitenden Hohlträger (12) zur Kühlung des mindestens einen wärmeleitenden Halteelements (14, 14a-c); und/oder
Verbinden der Enden der Kanäle (26) mehrerer der wärmeleitenden Hohlträger (12) mit einer Verbindungsleitung (18, 20), welche senkrecht zu den wärmeleitenden Hohlträgern (12) verläuft.

6. Verfahren gemäß einem der vorhergehenden Ansprüche, wobei das mindestens eine wärmeleitende Halteelement (14, 14a-c) an der Unterkonstruktion derart befestigt wird, dass das mindestens eine wärmeleitende Halteelement (14, 14a-c) mehrere der wärmeleitenden Hohlträger (12) überlagert; und/oder
wobei das Verfahren ferner umfasst:
Befestigen einer Mehrzahl wärmeleitender Halteelemente (14, 14a-c) auf den jeweiligen wärmeleitenden Hohlträgern (12),
wobei die Mehrzahl wärmeleitender Halteelemente (14, 14a-c) entlang einer Längsrichtung der Kanäle (26) auf den wärmeleitenden Hohlträgern (12) verteilt angeordnet sind.

7. Verfahren gemäß Anspruch 2 und optional gemäß einem der vorhergehenden Ansprüche 3 bis 6, wobei das mindestens eine wärmeleitende Halteelement (14, 14a-c) ein Blechdach ist oder bildet, insbesondere ein Blechdach aus Aluminium, Edelstahl, Kupfer, verzinktes Stahlblech oder Titanzink; und/oder
wobei die Mehrzahl parallel angeordneter wärmeleitender Hohlträger (12) im Wesentlichen durchgehend über eine Dachfläche verlaufen und vorzugsweise im Wesentlichen durchgehend vom First bis zur Traufe der Dachkonstruktion verlaufen; und/oder
wobei das Verfahren ferner umfasst:
Befestigen der wärmeleitenden Hohlträger (12) auf der Sparrenlage der tragenden Dachkonstruktion oder auf einer unteren Dachlattung (22) über der Sparrenlage; und/oder
wobei die wärmeleitenden Hohlträger (12) und das mindestens eine wärmeleitende Halteelement (14, 14a-c) getrennt gefertigt sind.

8. Verfahren gemäß einem der vorhergehenden Ansprüche, wobei die Unterkonstruktion Querträger (32) umfasst, welche insbesondere zwischen den Stützelementen und den wärmeleitenden Hohlträgern (12) angeordnet sind, welche sich in einem von Null verschiedenen Winkel, insbesondere im Wesentlichen senkrecht, zu den wärmeleitenden Hohlträgern (12) erstrecken, und welche mit mindestens zwei der wärmeleitenden Hohlträger (12) verbunden sind;
wobei die Querträger (32) sich optional im Wesentlichen über eine Breite des mindestens einen wärmeleitenden Halteelements (34, 34a-c) oder ein Vielfaches der Breite des mindestens einen wärmeleitenden Halteelements (34, 34a-c) erstrecken, sodass das mindestens eine wärmeleitende Halteelement (34, 34a-c) eine im Wesentlichen ebene Stützfläche für die Photovoltaikmodule (16) bildet.

9. Solaranlage (30) zur kombinierten Strom- und Wärmeerzeugung, umfassend:
eine Mehrzahl parallel angeordneter stützender wärmeleitender Hohlträger (12) mit integrierten Kanälen (26) für ein flüssiges Wärmeträgermedium, wobei die wärmeleitenden Hohlträger (12) Fluidanschlüsse umfassen, um das Wärmeträgermedium an einem ersten Ende der wärmeleitender Hohlträger (12) einzuleiten und an einem zweiten gegenüberliegenden Ende der wärmeleitenden Hohlträger (12) abzuleiten;
mindestens ein wärmeleitendes Halteelement (34, 34a-c), welches lösbar an mindestens zwei der wärmeleitenden Hohlträger (12) befestigt ist, um eine wärmeleitende Stützfläche zu bilden, welche über die wärmeleitenden Hohlträger (12) thermisch mit den Kanälen (26) gekoppelt ist, wobei die Solaranlage (30) ferner Querträger (32) umfasst, welche sich in einem von Null verschiedenen Winkel zu den wärmeleitenden Hohlträgern (12) erstrecken, und welche auf einer der Stützfläche gegenüberliegenden Seite mit mindestens zwei der wärmeleitenden Hohlträger (12) verbunden sind, um eine Trägerkonstruktion zur Stütze des mindestens einen wärmeleitenden Halteelements (34, 34a-c) zu bilden; und
mindestens ein Photovoltaikmodul (16) auf dem mindestens einen wärmeleitenden Halteelement (34, 34a-c);
wobei mindestens ein lösbar angebrachtes Klemmelement (38) die Photovoltaikmodule (16) kraft- und/oder formschlüssig an dem mindestens einen wärmeleitenden Halteelement (14, 14a-c) befestigt; und/oder
wobei das mindestens eine wärmeleitende Halteelement (14, 14a-c) eine flexible wärmeleitende Schicht und einen metallischen Trägerkörper (44) zum Tragen der Photovoltaikmodule (16) umfasst, wobei die wärmeleitende Schicht (46) an dem metallischen Trägerkörper (44) angebracht ist, sodass von den Photovoltaikmodulen (16) erzeugte Wärme durch die wärmeleitende Schicht (46) zu den wärmeleitenden Hohlträgern (12) geleitet wird, wobei die wärmeleitende Schicht (46) zwischen den wärmeleitenden Hohlträgern (12) und dem metallischen Trägerkörper (44) angeordnet ist.

10. Solaranlage (30) gemäß Anspruch 9, wobei die äußerste Dachlattung der Unterkonstruktion eines Dachaufbaus (10) bilden, und das mindestens eine wärmeleitende Halteelement (14, 14a-c) eine Dachdeckung bildet; und/oder
wobei die wärmeleitenden Hohlträger (12) die äußerste Lattung der Unterkonstruktion eines Wandaufbaus bilden, und das mindestens eine wärmeleitende Halteelement (14, 14a-c) eine Fassadenbekleidung bildet.

11. Solaranlage (30) gemäß Anspruch 9 oder 10, wobei die Querträger (32) sich im Wesentlichen senkrecht zu den wärmeleitenden Hohlträgern (12) erstrecken; und/oder
wobei die Querträger (32) sich im Wesentlichen über eine Breite des mindestens einen wärmeleitenden Halteelements (34, 34a-c) oder ein Vielfaches der Breite des mindestens einen wärmeleitenden Halteelements (34, 34a-c) erstrecken, sodass das mindestens eine wärmeleitende Halteelement (34, 34a-c) eine im Wesentlichen ebene Stützfläche für die Photovoltaikmodule (16) bildet.

12. Solaranlage (30) gemäß einem der Ansprüche 9-11, wobei die Mehrzahl wärmeleitender Hohlträger (12) metallische Hohlträger (12) sind, insbesondere Hohlträger (12) aus Aluminium und vorzugsweise Strangpressprofile aus Aluminium; und/oder
wobei das mindestens eine wärmeleitende Halteelement (14, 14a-c) ein metallisches Blechelement umfasst; und/oder
wobei das mindestens eine wärmeleitende Halteelement (14, 14a-c) mehrere der wärmeleitenden Hohlträger (12) überlagert; und/oder
wobei das mindestens eine wärmeleitende Halteelement (14, 14a-c) und die Mehrzahl wärmeleitender Hohlträger (12) getrennt gefertigt sind.

13. Solaranlage (30) gemäß Anspruch 10 und optional gemäß einem der Ansprüche 11 bis 12, wobei die Dachlattung eine untere Lattenkonstruktion mit einer Mehrzahl paralleler unterer Dachlatten (22) umfasst und die Mehrzahl wärmeleitender Hohlträger (12) auf den unteren Dachlatten (22) befestigt sind, wobei die wärmeleitenden Hohlträger (12) senkrecht zu den unteren Dachlatten (22) verlaufen; und/oder
wobei der Dachaufbau (10) Teil eines Schrägdaches ist, und wobei die wärmeleitenden Hohlträger (12) senkrecht oder parallel zur Firstlinie verlaufen; und/oder
wobei die Mehrzahl parallel angeordneter wärmeleitender Hohlträger (12) im Wesentlichen durchgehend über eine Dachfläche verlaufen und vorzugsweise im Wesentlichen durchgehend vom First bis zur Traufe der Dachkonstruktion verlaufen; und/oder
wobei die Dachlattung an einer Sparrenlage befestigt ist.

14. Solaranlage (30) gemäß einem der Ansprüche 9-13, wobei die Photovoltaikmodule (16) auf dem mindestens einen wärmeleitenden Halteelement (14, 14a-c) auflaminiert sind.

15. PVT-System zur kombinierten Strom- und Wärmeerzeugung, umfassend:
eine Mehrzahl parallel angeordneter wärmeleitender Hohlträger (12) mit integrierten Kanälen (26) für ein flüssiges Wärmeträgermedium, wobei die wärmeleitenden Hohlträger (12) Fluidanschlüsse umfassen, um das Wärmeträgermedium an einem ersten Ende der wärmeleitender Hohlträger (12) einzuleiten und an einem zweiten gegenüberliegenden Ende der wärmeleitenden Hohlträger (12) abzuleiten, wobei die Mehrzahl parallel angeordneter wärmeleitender Hohlträger (12) eine Stützebene zur Befestigung von Photovoltaikmodulen (16) definiert;
mindestens ein Photovoltaikmodul (16), welches parallel zu der Stützebene befestigt ist und thermisch mit der Mehrzahl parallel angeordneter wärmeleitender Hohlträger (12) gekoppelt ist; und
eine Graphitschicht (46), welche zwischen dem mindestens einen Photovoltaikmodul (16) und der Mehrzahl parallel angeordneter wärmeleitender Hohlträger (12) angeordnet ist, um Wärme von dem mindestens einen Photovoltaikmodul (16) zu der Mehrzahl parallel angeordneter wärmeleitender Hohlträger (12) zu leiten,
wobei das mindestens eine Photovoltaikmodul (16) einen metallischen Trägerkörper (44) umfasst, wobei die Graphitschicht (46) an dem metallischen Trägerkörper (44) angebracht ist, sodass von den Photovoltaikmodulen (16) erzeugte Wärme durch die Graphitschicht (46) zu den wärmeleitenden Hohlträgern (12) geleitet wird, wobei die Graphitschicht (46) zwischen den wärmeleitenden Hohlträgern (12) und dem metallischen Trägerkörper (44) angeordnet ist.

## Claims

1. A method for providing a solar system, in particular a roof structure (10) or a wall structure, for combined power and heat generation, the method comprising:
fixing a substructure on a supporting support structure, wherein the substructure comprises a plurality of heat-conducting hollow beams (12) arranged in parallel having integrated channels (26) for a liquid heat-conducting medium, and wherein the heat-conducting hollow beams (12) comprise fluid connections for introducing the heat-conducting medium at a first end of the heat-conducting hollow beams (12) and for discharging the heat-conducting medium at a second, opposite end of the heat-conducting hollow beams (12), wherein the heat-conducting hollow beams (12) are laid as load-bearing elements according to a roof lathing or outer lathing;
fixing at least one heat-conducting holding element (14, 14a-c) to the supporting heat-conducting hollow beams (12) of the substructure in order to form a heat-conducting support surface for photovoltaic modules (16), which is thermally coupled to the channels (26) via the heat-conducting hollow beams (12); and
attaching the photovoltaic modules (16) on the at least one heat-conducting holding element (14, 14a-c);
wherein at least one releasably attached clamping element (38) fixes the photovoltaic modules (16) to the at least one heat-conducting holding element (14, 14a-c) in a force-fitting and/or form-fitting manner; and/or
wherein the at least one heat-conducting holding element (14, 14a-c) comprises a flexible heat-conducting layer (46) and a metallic support body (44) for supporting the photovoltaic modules (16), wherein the heat-conducting layer (46) is attached to the metallic support body (44) such that heat generated by the photovoltaic modules (16) is conducted through the heat-conducting layer (46) to the heat-conducting hollow beams (12), wherein the heat-conducting layer (46) is arranged between the heat-conducting hollow beams (12) and the metallic support body (44).

2. The method according to claim 1, wherein the supporting support structure is a supporting roof structure,
wherein the heat-conducting hollow beams (12) form the outermost roof lathing of the substructure of a roof structure (10), and wherein the fixing of the at least one heat-conducting holding element (14, 14a-c) on the substructure forms a roof covering, wherein the roof structure optionally defines an inclined roof and the plurality of heat-conducting hollow beams (12) arranged in parallel are fixed perpendicularly or parallel to the ridge line thereof; and/or
wherein the supporting support structure is a supporting wall structure,
wherein the heat-conducting hollow beams (12) form the outermost lathing of the substructure, and wherein the fixing of the at least one heat-conducting holding element (14, 14a-c) on the substructure forms a facade cladding.

3. The method according to any one of the preceding claims, wherein the at least one heat-conducting holding element (14, 14a-c) preferably has a thermal conductivity of more than 50 W/(m*K), in particular more than 100 W/(m*K), preferably more than 150 W/(m*K); and/or
wherein the heat-conducting layer (46) has a thermal conductivity of more than 20 W/(m*K), in particular more than 50 W/(m*K), preferably more than 80 W/(m*K), wherein the heat-conducting layer (46) in particular has a thickness between 0.5 mm and 5 mm, between 1 and 4 mm, or approximately 2 mm; and/or
wherein a thermal conductivity of the heat-conducting layer (46) is greater than a thermal conductivity of the metallic carrier body (44),
wherein the heat-conducting layer (46) is a flexible film; and/or
wherein the heat-conducting layer (46) comprises graphite, or consists predominantly of graphite.

4. The method according to any one of the preceding claims, wherein a second heat-conducting layer (46) is arranged between the metallic carrier body (44) and an active layer (42) of the photovoltaic modules (16).

5. The method according to any one of the preceding claims, wherein the method further comprises:
connecting a fluid circuit to the fluid connections of the heat-conducting hollow beams (12) for cooling the at least one heat-conducting holding element (14, 14a-c); and/or
connecting the ends of the channels (26) of a plurality of the heat-conducting hollow beams (12) to a connecting line (18, 20) which runs perpendicularly to the heat-conducting hollow beams (12).

6. The method according to any one of the preceding claims, wherein the at least one heat-conducting holding element (14, 14a-c) is fixed to the substructure such that the at least one heat-conducting holding element (14, 14a-c) overlaps a plurality of the heat-conducting hollow beams (12); and/or
wherein the method further comprises:
fixing a plurality of heat-conducting holding elements (14, 14a-c) on the respective heat-conducting hollow beams (12),
wherein the plurality of heat-conducting holding elements (14, 14a-c) are arranged distributed along a longitudinal direction of the channels (26) on the heat-conducting hollow beams (12).

7. The method according to claim 2 and optionally according to any one of the preceding claims 3 to 6, wherein the at least one heat-conducting holding element (14, 14a-c) is or forms a sheet metal roof, in particular a sheet metal roof made of aluminum, stainless steel, copper, galvanized steel sheet or titanium zinc; and/or
wherein the plurality of heat-conducting hollow beams (12) arranged in parallel run substantially continuously over a roof surface and preferably run substantially continuously from the ridge to the eaves of the roof structure; and/or
wherein the method further comprises:
fixing the heat-conducting hollow beams (12) on the rafter layer of the supporting roof structure or on a lower roof lathing (22) above the rafter layer; and/or
wherein the heat-conducting hollow beams (12) and the at least one heat-conducting holding element (14, 14a-c) are manufactured separately.

8. The method according to any one of the preceding claims, wherein the substructure comprises cross beams (32), which are arranged in particular between the support elements and the heat-conducting hollow beams (12), which extend at a non-zero angle, in particular substantially perpendicularly, to the heat-conducting hollow beams (12), and which are connected to at least two of the heat-conducting hollow beams (12);
wherein the cross beams (32) optionally extend substantially over a width of the at least one heat-conducting holding element (34, 34a-c) or a multiple of the width of the at least one heat-conducting holding element (34, 34a-c), so that the at least one heat-conducting holding element (34, 34a-c) forms a substantially planar support surface for the photovoltaic modules (16).

9. A solar system (30) for combined power and heat generation, comprising:
a plurality of supporting heat-conducting hollow beams (12) arranged in parallel having integrated channels (26) for a liquid heat-conducting medium, wherein the heat-conducting hollow beams (12) comprise fluid connections for introducing the heat-conducting medium at a first end of the heat-conducting hollow beams (12) and for discharging the heat-conducting medium at a second, opposite end of the heat-conducting hollow beams (12);
at least one heat-conducting holding element (34, 34a-c), which is releasably fixed to at least two of the heat-conducting hollow beams (12) in order to form a heat-conducting support surface, which is thermally coupled to the channels (26) via the heat-conducting hollow beams (12), wherein the solar system (30) further comprises cross beams (32), which extend at a non-zero angle to the heat-conducting hollow beams (12), and which are connected to at least two of the heat-conducting hollow beams (12) on a side opposite the support surface in order to form a support structure for supporting the at least one heat-conducting holding element (34, 34a-c); and
at least one photovoltaic module (16) on the at least one heat-conducting holding element (34, 34a-c);
wherein at least one releasably attached clamping element (38) fixes the photovoltaic modules (16) to the at least one heat-conducting holding element (14, 14a-c) in a force-fitting and/or form-fitting manner; and/or
wherein the at least one heat-conducting holding element (14, 14a-c) comprises a flexible heat-conducting layer and a metallic support body (44) for supporting the photovoltaic modules (16), wherein the heat-conducting layer (46) is attached to the metallic support body (44) such that heat generated by the photovoltaic modules (16) is conducted through the heat-conducting layer (46) to the heat-conducting hollow beams (12), wherein the heat-conducting layer (46) is arranged between the heat-conducting hollow beams (12) and the metallic support body (44).

10. The solar system (30) according to claim 9, wherein the outermost roof lathing of the substructure of a roof structure (10), and the at least one heat-conducting holding element (14, 14a-c) forms a roof covering; and/or
wherein the heat-conducting hollow beams (12) form the outermost lathing of the substructure of a wall structure, and the at least one heat-conducting holding element (14, 14a-c) forms a facade cladding.

11. The solar system (30) according to claim 9 or 10, wherein the cross beams (32) extend substantially perpendicularly to the heat-conducting hollow beams (12); and/or
wherein the cross beams (32) extend substantially over a width of the at least one heat-conducting holding element (34, 34a-c) or a multiple of the width of the at least one heat-conducting holding element (34, 34a-c), so that the at least one heat-conducting holding element (34, 34a-c) forms a substantially planar support surface for the photovoltaic modules (16).

12. The solar system (30) according to any one of claims 9-11, wherein the plurality of heat-conducting hollow beams (12) are metallic hollow beams (12), in particular hollow beams (12) made of aluminum and preferably extruded profiles made of aluminum; and/or
wherein the at least one heat-conducting holding element (14, 14a-c) comprises a sheet metal element; and/or
wherein the at least one heat-conducting holding element (14, 14a-c) overlaps a plurality of the heat-conducting hollow beams (12); and/or
wherein the at least one heat-conducting holding element (14, 14a-c) and the plurality of heat-conducting hollow beams (12) are manufactured separately.

13. The solar system (30) according to claim 10 and optionally according to any one of claims 11 to 12, wherein the roof lathing comprises a lower lathing structure with a plurality of parallel lower roof lathings (22) and the plurality of heat-conducting hollow beams (12) are fixed on the lower roof lathings (22), wherein the heat-conducting hollow beams (12) extend perpendicularly to the lower roof lathings (22); and/or
wherein the roof structure (10) is part of an inclined roof, and wherein the heat-conducting hollow beams (12) extend perpendicularly or parallel to the ridge line; and/or
wherein the plurality of heat-conducting hollow beams (12) arranged in parallel run substantially continuously over a roof surface and preferably run substantially continuously from the ridge to the eaves of the roof structure; and/or
wherein the roof lathing is fixed to a rafter layer.

14. The solar system (30) according to any one of claims 9-13, wherein the photovoltaic modules (16) are laminated on the at least one heat-conducting holding element (14, 14a-c).

15. A PVT system for combined power and heat generation, comprising:
a plurality of heat-conducting hollow beams (12) arranged in parallel having integrated channels (26) for a liquid heat-conducting medium, wherein the heat-conducting hollow beams (12) comprise fluid connections for introducing the heat-conducting medium at a first end of the heat-conducting hollow beams (12) and for discharging the heat-conducting medium at a second, opposite end of the heat-conducting hollow beams (12), wherein the plurality of heat-conducting hollow beams (12) arranged in parallel define a support plane for fixing photovoltaic modules (16);
at least one photovoltaic module (16), which is fixed parallel to the support plane and is thermally coupled to the plurality of heat-conducting hollow beams (12) arranged in parallel; and
a graphite layer (46), which is arranged between the at least one photovoltaic module (16) and the plurality of heat-conducting hollow beams (12) arranged in parallel, for conducting heat from the at least one photovoltaic module (16) to the plurality of heat-conducting hollow beams (12) arranged in parallel,
wherein the at least one photovoltaic module (16) comprises a metallic support body (44), wherein the graphite layer (46) is attached to the metallic support body (44) such that heat generated by the photovoltaic modules (16) is conducted through the graphite layer (46) to the heat-conducting hollow beams (12), wherein the graphite layer (46) is arranged between the heat-conducting hollow beams (12) and the metallic support body (44).

## Revendications

1. Procédé de mise à disposition d'une installation solaire, en particulier d'une structure de toit (10) ou d'une structure de paroi, pour la production combinée d'électricité et de chaleur, le procédé comprenant :
la fixation d'une sous-structure sur une structure de support porteuse, dans lequel la sous-structure comprend une pluralité de poutres creuses thermoconductrices (12) disposées en parallèle avec des canaux intégrés (26) pour un milieu caloporteur liquide, et dans lequel les poutres creuses thermoconductrices (12) comprennent des raccords de fluide pour introduire le milieu caloporteur au niveau d'une première extrémité des poutres creuses thermoconductrices (12) et pour l'évacuer au niveau d'une seconde extrémité opposée des poutres creuses thermoconductrices (12), dans lequel les poutres creuses thermoconductrices (12) sont posées en tant qu'éléments porteurs selon un lattis de toit ou un lattis extérieure ;
la fixation d'au moins un élément de retenue thermoconducteur (14, 14a-c) sur les poutres creuses thermoconductrices de support (12) de la sous-structure, afin de former une surface de support thermoconductrice pour des modules photovoltaïques (16), laquelle est couplée thermiquement aux canaux (26) par le biais des poutres creuses thermoconductrices (12) ; et
le montage des modules photovoltaïques (16) sur l'au moins un élément de retenue thermoconducteur (14, 14a-c) ;
dans lequel au moins un élément de serrage (38) monté de manière amovible fixe les modules photovoltaïques (16) par engagement par force et/ou par correspondance de forme sur l'au moins un élément de retenue thermoconducteur (14, 14a-c) ; et/ou
dans lequel l'au moins un élément de retenue thermoconducteur (14, 14a-c) comprend une couche thermoconductrice flexible (46) et un corps de support métallique (44) pour supporter les modules photovoltaïques (16), dans lequel la couche thermoconductrice (46) est montée sur le corps de support métallique (44) de sorte que la chaleur produite par les modules photovoltaïques (16) est conduite à travers la couche thermoconductrice (46) vers les poutres creuses thermoconductrices (12), dans lequel la couche thermoconductrice (46) est disposée entre les poutres creuses thermoconductrices (12) et le corps de support métallique (44).

2. Procédé selon la revendication 1, dans lequel la structure de support porteuse est une structure de toit porteuse,
dans lequel les poutres creuses thermoconductrices (12) forment le lattis de toit le plus à l'extérieur de la sous-structure d'une structure de toit (10), et dans lequel la fixation de l'au moins un élément de retenue thermoconducteur (14, 14a-c) sur la sous-structure forme une couverture de toit, dans lequel la structure de toit définit facultativement un toit incliné et la pluralité de poutres creuses thermoconductrices (12) disposées parallèlement sont fixées perpendiculairement ou parallèlement à la ligne de faîte de celle-ci ; et/ou
dans lequel la structure de support porteuse est une structure de paroi porteuse,
dans lequel les poutres creuses thermoconductrices (12) forment le lattis le plus à l'extérieur de la sous-structure, et dans lequel la fixation de l'au moins un élément de retenue thermoconducteur (14, 14a-c) sur la sous-structure forme un revêtement de façade.

3. Procédé selon l'une quelconque des revendications précédentes, dans lequel l'au moins un élément de retenue thermoconducteur (14, 14a-c) a de préférence une conductivité thermique supérieure à 50 W/(m*K), en particulier supérieure à 100 W/(m*K), de préférence supérieure à 150 W/(m*K) ; et/ou
dans lequel la couche thermoconductrice (46) a une conductivité thermique supérieure à 20 W/(m*K), en particulier supérieure à 50 W/(m*K), de préférence supérieure à 80 W/(m*K), dans lequel la couche thermoconductrice (46) a en particulier une épaisseur comprise entre 0,5 mm et 5 mm, entre 1 et 4 mm, ou d'environ 2 mm ; et/ou
dans lequel une conductivité thermique de la couche thermoconductrice (46) est supérieure à une conductivité thermique du corps de support métallique (44),
dans lequel la couche thermoconductrice (46) est un film flexible ; et/ou
dans lequel la couche thermoconductrice (46) comprend du graphite, ou est principalement constituée de graphite.

4. Procédé selon l'une quelconque des revendications précédentes, dans lequel une deuxième couche thermoconductrice (46) est disposée entre le corps de support métallique (44) et une couche active (42) des modules photovoltaïques (16).

5. Procédé selon l'une quelconque des revendications précédentes, dans lequel le procédé comprend en outre :
le raccordement d'un circuit de fluide aux raccords de fluide des poutres creuses thermoconductrices (12) pour refroidir l'au moins un élément de retenue thermoconducteur (14, 14a-c) ; et/ou
le raccordement des extrémités des canaux (26) d'une pluralité des poutres creuses thermoconductrices (12) à un conduit de raccordement (18, 20) qui s'étend perpendiculairement aux poutres creuses thermoconductrices (12).

6. Procédé selon l'une quelconque des revendications précédentes, dans lequel l'au moins un élément de retenue thermoconducteur (14, 14a-c) est fixé sur la sous-structure de telle sorte que l'au moins un élément de retenue thermoconducteur (14, 14a-c) superpose une pluralité des poutres creuses thermoconductrices (12) ; et/ou
dans lequel le procédé comprend en outre :
la fixation d'une pluralité d'éléments de retenue thermoconducteurs (14, 14a-c) sur les poutres creuses thermoconductrices (12) respectives,
dans lequel la pluralité d'éléments de retenue thermoconducteurs (14, 14a-c) sont disposés de manière répartie le long d'une direction longitudinale des canaux (26) sur les poutres creuses thermoconductrices (12).

7. Procédé selon la revendication 2 et facultativement selon l'une quelconque des revendications précédentes 3 à 6, dans lequel l'au moins un élément de retenue thermoconducteur (14, 14a-c) est ou forme un toit en tôle, en particulier un toit en tôle d'aluminium, d'acier inoxydable, de cuivre, de tôle d'acier galvanisée ou de titane-zinc ; et/ou
dans lequel la pluralité de poutres creuses thermoconductrices (12) disposées parallèlement s'étendent sensiblement en continu sur une surface de toit et s'étendent de préférence sensiblement en continu du faîte à l'avant-toit de la structure de toit ; et/ou
dans lequel le procédé comprend en outre :
la fixation des poutres creuses thermoconductrices (12) sur la couche de chevrons de la structure de toit porteuse ou sur un lattis de toit inférieur (22) au-dessus de la couche de chevrons ; et/ou
dans lequel les poutres creuses thermoconductrices (12) et l'au moins un élément de retenue thermoconducteur (14, 14a-c) sont fabriqués séparément.

8. Procédé selon l'une quelconque des revendications précédentes, dans lequel la sous-structure comprend des poutres transversales (32), qui sont en particulier disposées entre les éléments de support et les poutres creuses thermoconductrices (12), qui s'étendent selon un angle non nul, en particulier sensiblement perpendiculairement, par rapport aux poutres creuses thermoconductrices (12), et qui sont reliées à au moins deux des poutres creuses thermoconductrices (12) ;
dans lequel les poutres transversales (32) s'étendent facultativement sensiblement sur une largeur de l'au moins un élément de retenue thermoconducteur (34, 34a-c) ou sur un multiple de la largeur de l'au moins un élément de retenue thermoconducteur (34, 34a-c), de sorte que l'au moins un élément de retenue thermoconducteur (34, 34a-c) forme une surface de support sensiblement plane pour les modules photovoltaïques (16).

9. Installation solaire (30) pour la production combinée d'électricité et de chaleur, comprenant :
une pluralité de poutres creuses thermoconductrices de support (12) disposées en parallèle avec des canaux intégrés (26) pour un milieu caloporteur liquide, dans lequel les poutres creuses thermoconductrices (12) comprennent des raccords de fluide pour introduire le milieu caloporteur au niveau d'une première extrémité des poutres creuses thermoconductrices (12) et pour l'évacuer au niveau d'une seconde extrémité opposée des poutres creuses thermoconductrices (12) ;
au moins un élément de retenue thermoconducteur (34, 34a-c), qui est fixé de manière amovible à au moins deux des poutres creuses thermoconductrices (12), afin de former une surface de support thermoconductrice, laquelle est couplée thermiquement aux canaux (26) par le biais des poutres creuses thermoconductrices (12), dans laquelle l'installation solaire (30) comprend en outre des poutres transversales (32), qui s'étendent selon un angle non nul par rapport aux poutres creuses thermoconductrices (12), et qui sont reliées à au moins deux des poutres creuses thermoconductrices (12) sur un côté opposé à la surface de support, afin de former une structure de poutre pour supporter l'au moins un élément de retenue thermoconducteur (34, 34a-c) ; et
au moins un module photovoltaïque (16) sur l'au moins un élément de retenue thermoconducteur (34, 34a-c) ;
dans lequel au moins un élément de serrage (38) monté de manière amovible fixe les modules photovoltaïques (16) par engagement par force et/ou par correspondance de forme sur l'au moins un élément de retenue thermoconducteur (14, 14a-c) ; et/ou
dans lequel l'au moins un élément de retenue thermoconducteur (14, 14a-c) comprend une couche thermoconductrice flexible et un corps de support métallique (44) pour supporter les modules photovoltaïques (16), dans lequel la couche thermoconductrice (46) est montée sur le corps de support métallique (44) de sorte que la chaleur produite par les modules photovoltaïques (16) est conduite à travers la couche thermoconductrice (46) vers les poutres creuses thermoconductrices (12), dans lequel la couche thermoconductrice (46) est disposée entre les poutres creuses thermoconductrices (12) et le corps de support métallique (44).

10. Installation solaire (30) selon la revendication 9, dans laquelle le lattis de toit le plus à l'extérieur de la sous-structure d'une structure de toit (10), et l'au moins un élément de retenue thermoconducteur (14, 14a-c) forment une couverture de toit ; et/ou
dans laquelle les poutres creuses thermoconductrices (12) forment le lattis le plus à l'extérieur de la sous-structure d'une structure de paroi, et l'au moins un élément de retenue thermoconducteur (14, 14a-c) forment un revêtement de façade.

11. Installation solaire (30) selon la revendication 9 ou 10, dans laquelle les poutres transversales (32) s'étendent sensiblement perpendiculairement aux poutres creuses thermoconductrices (12) ; et/ou
dans laquelle les poutres transversales (32) s'étendent sensiblement sur une largeur de l'au moins un élément de retenue thermoconducteur (34, 34a-c) ou sur un multiple de la largeur de l'au moins un élément de retenue thermoconducteur (34, 34a-c), de sorte que l'au moins un élément de retenue thermoconducteur (34, 34a-c) forme une surface de support sensiblement plane pour les modules photovoltaïques (16).

12. Installation solaire (30) selon l'une quelconque des revendications 9 à 11, dans laquelle la pluralité de poutres creuses thermoconductrices (12) sont des poutres creuses métalliques (12), en particulier des poutres creuses (12) en aluminium et de préférence des profilés extrudés en aluminium ; et/ou
dans laquelle l'au moins un élément de retenue thermoconducteur (14, 14a-c) comprend un élément en tôle métallique ; et/ou
dans laquelle l'au moins un élément de retenue thermoconducteur (14, 14a-c) superpose une pluralité des poutres creuses thermoconductrices (12) ; et/ou
dans laquelle l'au moins un élément de retenue thermoconducteur (14, 14a-c) et la pluralité de poutres creuses thermoconductrices (12) sont fabriqués séparément.

13. Installation solaire (30) selon la revendication 10 et facultativement selon l'une quelconque des revendications 11 à 12, dans laquelle le lattis de toit comprend une structure de lattes inférieure avec une pluralité de lattes de toit inférieures parallèles (22) et la pluralité de poutres creuses thermoconductrices (12) sont fixées sur les lattes de toit inférieures (22), dans laquelle les poutres creuses thermoconductrices (12) s'étendent perpendiculairement aux lattes de toit inférieures (22) ; et/ou
dans laquelle la structure de toit (10) fait partie d'un toit incliné, et dans laquelle les poutres creuses thermoconductrices (12) s'étendent perpendiculairement ou parallèlement à la ligne de faîte ; et/ou
dans laquelle la pluralité de poutres creuses thermoconductrices (12) disposées parallèlement s'étendent sensiblement en continu sur une surface de toit et s'étendent de préférence sensiblement en continu du faîte à l'avant-toit de la structure de toit ; et/ou
dans laquelle le lattis de toit est fixé à une couche de chevrons.

14. Installation solaire (30) selon l'une quelconque des revendications 9 à 13, dans laquelle les modules photovoltaïques (16) sont stratifiés sur l'au moins un élément de retenue thermoconducteur (14, 14a-c).

15. Système PVT pour la production combinée d'électricité et de chaleur, comprenant :
une pluralité de poutres creuses thermoconductrices (12) disposées en parallèle avec des canaux intégrés (26) pour un milieu caloporteur liquide, dans lequel les poutres creuses thermoconductrices (12) comprennent des raccords de fluide pour introduire le milieu caloporteur au niveau d'une première extrémité des poutres creuses thermoconductrices (12) et pour l'évacuer au niveau d'une seconde extrémité opposée des poutres creuses thermoconductrices (12), dans lequel la pluralité de poutres creuses thermoconductrices (12) disposées en parallèle définit un plan de support pour la fixation de modules photovoltaïques (16) ;
au moins un module photovoltaïque (16), lequel est fixé parallèlement au plan de support et est couplé thermiquement à la pluralité de poutres creuses thermoconductrices (12) disposées en parallèle ; et
une couche de graphite (46), laquelle est disposée entre l'au moins un module photovoltaïque (16) et la pluralité de poutres creuses thermoconductrices (12) disposées en parallèle, pour conduire la chaleur de l'au moins un module photovoltaïque (16) vers la pluralité de poutres creuses thermoconductrices (12) disposées en parallèle,
dans lequel l'au moins un module photovoltaïque (16) comprend un corps de support métallique (44), dans lequel la couche de graphite (46) est montée sur le corps de support métallique (44) de sorte que la chaleur produite par les modules photovoltaïques (16) est conduite à travers la couche de graphite (46) vers les poutres creuses thermoconductrices (12), dans lequel la couche de graphite (46) est disposée entre les poutres creuses thermoconductrices (12) et le corps de support métallique (44).
